# EUROPEAN PATENT APPLICATION

(11) **EP 4 620 359 A1**
(43) Date of publication of application: **24.09.2025**
(21) Application number: 24165263.5
(22) Date of filing: 21.03.2024
(51) Int. Cl.: A47J 31/52

(54) **BEVERAGE MAKING MACHINE OPERATION**

(71) Applicant: Versuni Holding B.V., 1082 MD Amsterdam (NL)
(72) Inventor: SINNEMA, Anke Gerda, 1082 MD Amsterdam (NL); HIEMSTRA, Hielke, 1082 MD Amsterdam (NL); HOLWERDA, Simon Renze, 1082 MD Amsterdam (NL); WIJTSMA, Douwe Andreas, 1082 MD Amsterdam (NL)
(74) Representative: Vollering, Stefanus Franciscus Maria

(57) **Abstract**

There is provided a method (100) for operating a beverage making machine. The method comprises receiving (102) a user selection and adjusting (104) a start-up operation of the beverage making machine based on the user selection. The user selection is indicative of a beverage to be prepared by the beverage making machine. The start-up operation is performed before a beverage making operation of the beverage making machine. The user selection is received and the start-up operation is adjusted before the beverage making machine begins the start-up operation.

## Description

### FIELD OF THE INVENTION

The disclosure relates to a beverage making machine and the operation of such a beverage making machine.

### BACKGROUND OF THE INVENTION

WO 2020/126876 A1 discloses a bean-to-cup espresso coffee machine, which is a machine configured to perform both a function of grinding coffee beans and a function of brewing espresso coffee by passing pressurized hot water through the coffee grinds to create an espresso coffee drink. The known coffee machine comprises a water container, a heater for heating water to generate hot water and optionally steam, and a water pump for pumping the heated water and steam. During a coffee brewing process, a brew chamber is filled with a suitable amount of coffee grinds. Further, both the heater and the water pump are operated, wherein the heated water is pumped from the heater to the brew chamber through a valve.

Usually, when switching on a beverage making machine (e.g. a fully automatic espresso machine), the beverage making machine will immediately begin to perform some start-up activities. These activities can include heating up water or other liquid, and pre-rinsing (e.g. a brew chamber and/or a water duct). The start-up activities normally begin immediately after a beverage making machine is first switched on. Once the beverage making machine is ready, which is after the start-up activities have been performed, a user can select a beverage to be made by the beverage making machine.

In a particular example, existing espresso machines typically need to go through some start-up routine in order to make the machine ready to brew a coffee. The start-up routine may include heating up the heater, rinsing parts of the machine to preheat, and/or or cleaning said parts, etc. Once the start-up routine is finished, a user may enter a beverage request. The machine will then prepare the beverage, e.g. grind beans and brew coffee.

However, in these existing techniques, a user spends a long time waiting for the beverage making machine to actually be ready to start making a beverage.

### SUMMARY OF THE INVENTION

As noted above, there is a limitation with existing techniques in that a user has to wait a long time after switching on a beverage making machine to be able to select a beverage to be prepared, since the beverage making machine must first perform its start-up activities. The user then has to wait again before their beverage is actually ready to be collected. Thus, the existing techniques for beverage machine operation are inefficient and waste the user's time. It may also be that, during the waiting period, the beverage making machine performs start-up activities which are unnecessary for the beverage requested by the user to be prepared. The performance of such unnecessary activities (e.g. heating and/or pre-rinsing) leads to resource wastage, which is undesirable in terms of sustainability.

It would thus be valuable to have an improvement that is aimed at addressing these limitations.

Therefore, according to a first aspect, there is provided a method for operating a beverage making machine. The method comprises receiving a user selection. The user selection is indicative of a beverage to be prepared by the beverage making machine. The method comprises adjusting a start-up operation of the beverage making machine based on the user selection. The start-up operation is performed before a beverage making operation of the beverage making machine. The user selection is received and the start-up operation is adjusted before the beverage making machine begins the start-up operation.

According to a second aspect, there is provided a beverage making machine comprising a controller configured to control the operation of the beverage making machine in accordance with the method.

According to a third aspect, there is provided a computer program product comprising a computer readable medium. The computer readable medium has a computer readable code embodied therein. The computer readable code is configured such that, on execution by a suitable computer or processor, the computer or processor is caused to perform the method.

According to the aspects and embodiments described above, the limitations of existing techniques are addressed. In particular, according to the above-described aspects, the operation of the beverage making machine is improved. In particular, the user selection is received and the start-up operation is adjusted based on the user selection before the beverage making machine actually begins the start-up operation. As such, the start-up operation is optimized (or made suitable) for preparation of the particular beverage indicated by the user selection in advance of the start-up operation beginning. This optimization can, for example, avoid activities of the start-up operation being performed when they are unnecessary for the beverage that is to be prepared. As a result, the beverage can be prepared more efficiently, without wasting resources or energy. Moreover, this optimization can avoid the start-up operation being performed incorrectly for the beverage that is to be prepared. As a result, the beverage can be prepared more reliably. There is thus provided an improved technique for operating a beverage making machine.

These and other aspects will be apparent from and elucidated with reference to the embodiment(s) described hereinafter.

### BRIEF DESCRIPTION OF THE DRAWINGS

Exemplary embodiments will now be described, by way of example only, with reference to the following drawings, in which:
Fig. 1 is a schematic illustration of a beverage making machine according to some embodiments;
Figs. 2-8 are block diagrams illustrating methods according to some embodiment; and
Figs. 9 and 10 are schematic illustrations of a beverage making machine according to some embodiments.

### DETAILED DESCRIPTION OF EMBODIMENTS

The following detailed description of specific examples covered by the invention is intended for purposes of illustration only and not to limit the scope of protection as defined in the claims.

As noted above, there is provided herein a beverage making machine and a technique for operating the beverage making machine. A beverage making machine is a machine for making (or preparing) a beverage. The beverage making machine referred to herein may be any type of machine that is capable of making (e.g. operable to make) a beverage.

Herein, a beverage may be any type of beverage. More specifically, the beverage referred to herein can be any liquid that is intended for human consumption. A beverage can also be referred to as a drink. The beverage referred to herein can be a hot beverage or a cold beverage. Examples of the beverage referred to herein include, but are not limited to, coffee, tea, hot chocolate, water, milk, soda, juice, smoothie, energy drink, sports drink, or any other type of beverage. The beverage referred to herein can be a carbonated beverage, i.e. a beverage that has carbon dioxide (CO2) added to it, such as soda, sports drink, energy drink, or any other type of carbonated beverage. Alternatively, the beverage referred to herein can be an uncarbonated beverage, i.e. a beverage that does not have CO2 added to it, such as coffee, tea, hot chocolate, water, milk, juice, smoothie, energy drink, or any other type of uncarbonated beverage. The making (or preparation) of tea or coffee may comprise brewing. A coffee can be a black coffee or a milk-based coffee, such as a milk-based coffee that is prepared by first frothing milk and then dispensing coffee into the frothed milk or a milk-based coffee that is prepared by first dispensing coffee and then dispensing milk into the coffee.

The beverage making machine referred to herein can be a connected (or smart) appliance in that it can have the ability to connect to other appliances via a wireless protocol. The beverage making machine referred to herein may thus be an Internet of Things (IoT) beverage making machine. The beverage making machine referred to herein may be fully automatic or semi-automatic.

The beverage making machine referred to herein can be a domestic appliance or a commercial appliance. Herein, a domestic appliance can be an appliance that is used in domestic setting, such as a home, a household, a residence, or any other domestic setting. Also, herein, a commercial appliance can be an appliance that is used in a commercial setting, such as an office, a shop, a restaurant, a cafe, or any other commercial setting. The beverage making machine referred to herein may also be referred to as a beverage making appliance or a beverage making device.

The beverage making machine referred to herein can be capable of preparing one or more types of beverage, such as coffee, tea, hot chocolate, water, milk, soda, juice, smoothie, energy drink, sports drink, and/or any other type of beverage. A beverage making machine capable of preparing coffee can be referred to as a coffee machine (or coffee maker). Herein, a coffee machine can be any type of coffee machine, such as a bean-to-cup coffee machine (e.g. comprising a grinder for grinding coffee beans), a capsule/pod coffee machine, an espresso coffee machine, a filter coffee machine, or any other coffee machine. A beverage making machine capable of preparing tea can be referred to as a tea maker. A beverage making machine capable of preparing hot chocolate can be referred to as a hot chocolate maker. A beverage making machine capable of preparing juice can be referred to as a juicer. A beverage making machine capable of preparing smoothies can be referred to as a smoothy maker. A beverage making machine capable of preparing a carbonated beverage can be referred to as a carbonating device.

The technique described herein involves a user selection that is indicative of a beverage to be prepared by the beverage making machine. The user selection can be generated at a user equipment (UE) or at the beverage making machine itself. The user selection can be generated at the UE via a user interface (e.g. a touch screen) of the UE. Similarly, the user selection can be generated at the beverage making machine via a user interface (e.g. a touch screen) of the beverage making machine.

A user selection generated at a UE can, for example, be via an application (or 'app', e.g. a mobile application) running on the UE. The application may be used to control the beverage making machine. The UE can be remote from the beverage making machine. Thus, the user selection can be performed remotely. The UE may communicate directly with the beverage making machine or indirectly with the beverage making machine, such as via one or more cloud environments. Similarly, the beverage making machine may communicate directly with the UE or indirectly with the UE, such as via one or more cloud environments.

Herein, a UE can be any device used directly by an end user to communicate. Examples of the UE referred to herein include, but are not limited to, a smart device (e.g. a smart phone, a tablet, a smart speaker such as an Alexa speaker, a smart watch, or any other smart device), a mobile phone, a cell phone, a voice over IP (VoIP) phone, a wireless local loop phone, a desktop computer, a personal digital assistant (PDA), a gaming console or device, a wearable device, a laptop, a laptop-embedded equipment (LEE), a laptop-mounted equipment (LME), a vehicle-mounted wireless device, or any other UE.

A UE may support device-to-device (D2D) communication and may in this case be referred to as a D2D communication device. The UE referred to herein may represent the endpoint of a wireless connection, in which case the UE may be referred to as a wireless terminal. The UE referred to herein may be mobile, in which case the UE may be referred to as a mobile device or a mobile terminal.

The techniques described herein are performed by the beverage making machine, such as by a controller (or processor) of the beverage making machine. The techniques described herein are for operating the beverage making machine.

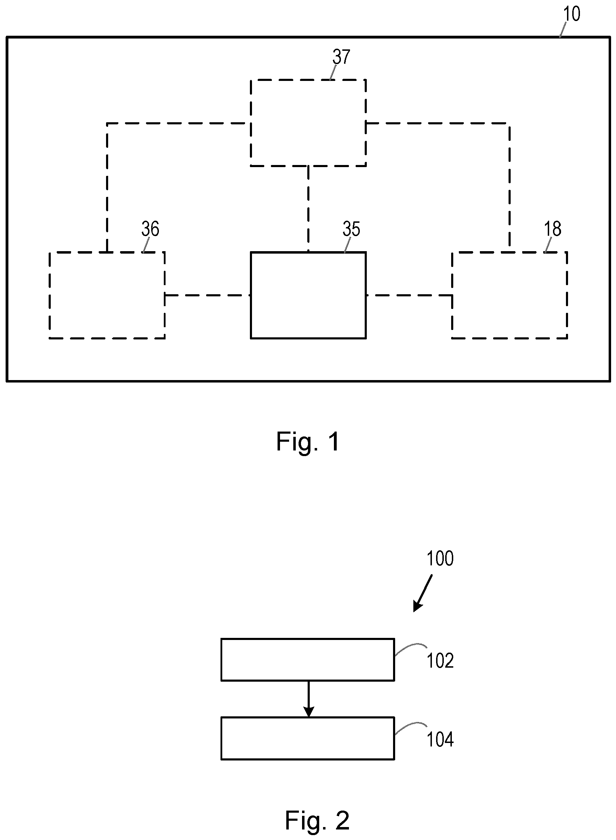

Fig. 1 illustrates the beverage making machine 10 according to an embodiment. As illustrated in Fig. 1, the beverage making machine 10 comprises a controller (e.g. processing circuitry or logic) 35. The controller 35 is configured to control the operation of the beverage making machine 10 and can implement the method described herein in respect of the beverage making machine 10.

The controller 35 can comprise one or more hardware components, such as one or more processors (e.g. one or more microprocessors, one or more multi-core processors, and/or one or more digital signal processors (DSPs)), one or more processing units, and/or one or more processing modules). The one or more hardware components may be configured or programmed (e.g. using software or computer program code) to perform the various functions described herein in respect of the beverage making machine 10. In particular implementations, each of the one or more hardware components can be configured to perform, or is for performing, individual or multiple steps of the method described herein in respect of the beverage making machine 10. The controller 35 can be configured to run software to perform the method described herein in respect of the beverage making machine 10. The controller 35 can thus be implemented in numerous ways, with software and/or hardware, to perform the various functions described herein in respect of the beverage making machine 10.

Briefly, the controller 35 of the beverage making machine 10 is configured to receive a user selection and adjust a start-up operation of the beverage making machine 10 based on the user selection. The user selection is indicative of a beverage to be prepared by the beverage making machine. The start-up operation is performed before a beverage making operation of the beverage making machine. Advantageously, the user selection is received and the start-up operation is adjusted before the beverage making machine begins the start-up operation.

As illustrated in Fig. 1, the beverage making machine 10 may optionally comprise a memory 36. Alternatively, the memory 36 may be external to (e.g. separate to or remote from) the beverage making machine 10. The memory 36 may comprise any type of non-transitory machine-readable medium, such as at least one cache or system memory. The memory 36 may comprise a volatile or a non-volatile memory. Examples of the memory 36 include, but are not limited to, a random access memory (RAM), a static RAM (SRAM), a dynamic RAM (DRAM), a read-only memory (ROM), a programmable ROM (PROM), an erasable PROM (EPROM), and an electrically erasable PROM (EEPROM), and/or any other memory.

The controller 35 can be communicatively coupled (e.g. connected) to the memory 36. The controller 35 may be configured to communicate with and/or connect to the memory 36. The memory 36 may be for storing program code or instructions which, when executed by the controller 35, cause the beverage making machine 10 to operate in the manner described herein. For example, the memory 36 may be configured to store program code or instructions that can be executed by the controller 35 to cause the beverage making machine 10 to operate in accordance with the method described herein. Alternatively or in addition, the memory 36 can be configured to store any information, data, messages, requests, responses, indications, notifications, signals, or similar, that are described herein. The controller 35 may be configured to control the memory 36 to store information, data, messages, requests, responses, indications, notifications, signals, or similar, that are described herein.

As illustrated in Fig. 1, the beverage making machine 10 may optionally comprise a user interface 18. The user interface 18 can be configured to render (or output, display, or provide) information required by or resulting from the method described herein. For example, the user interface 18 may be configured to render (or output, display, or provide) any information, data, messages, requests, responses, indications, notifications, signals, or similar, that are described herein. Alternatively or in addition, the user interface 18 can be configured to receive a user input. For example, the user interface 18 may allow a user to manually enter information or instructions, interact with, and/or control the beverage making machine 10. Thus, the user interface 18 may be a user interface that enables the rendering (or outputting, displaying, or providing) of information and/or that enables a user to provide a user input. For example, the user interface 18 may be configured to receive the user selection referred to herein.

The user interface 18 may comprise one or more components for rendering information and/or one or more components that enable the user to provide a user input. The one or more components for rendering information can comprise one or more visual components (e.g. a display or display screen, a graphical user interface (GUI) such as a touch screen, one or more lights such one or more light emitting diodes (LEDs), and/or any other visual component), one or more audio components (e.g. one or more speakers, and/or any other audio component), and/or one or more tactile/haptic components (e.g. a vibration function, or any other haptic/tactile feedback component), or any other user interface, or combination of user interfaces. The one or more components that enable the user to provide a user input can comprise one or more visual components (e.g. one or more switches, one or more buttons, a keypad, a keyboard, a mouse, a graphical user interface (GUI) such as a touch screen, and/or any other visual component), and/or one or more audio components (e.g. one or more microphones, and/or any other audio component), and/or one or more tactile/haptic components (e.g. a vibration function, or any other haptic/tactile feedback component), or any other user interface, or combination of user interfaces.

As illustrated in Fig. 1, the beverage making machine 10 may optionally comprise a communications interface (or communications circuitry) 37. The communications interface 37 can be communicatively coupled (e.g. connected) to the controller 35, the memory 36, and/or the user interface 18. The controller 35 may be configured to communicate with and/or connect to the communications interface 37. In some embodiments, the controller 35 can be configured to control the communications interface 37 to operate in the manner described herein. The communications interface 37 can be for enabling the beverage making machine 10, or components of the beverage making machine 10 (e.g. the controller 35, the memory 36, the user interface 18, and/or any other components of the beverage making machine 10), to communicate with and/or connect to each other and/or one or more other components.

For example, the communications interface 37 may be operable to allow the controller 35 to communicate with and/or connect to the memory 36 and/or vice versa. Similarly, the communications interface 37 may be operable to allow the controller 35 to communicate with and/or connect to the user interface 18 and/or vice versa. Similarly, the communications interface 37 may be operable to allow the controller 35 to communicate with and/or connect to any one or more other entities (e.g. any one or more of the second entity, the third entity, and any other entity) referred to herein, such as the UE referred to herein. The communications interface 37 can be configured to transmit and/or receive information, data, messages, requests, responses, indications, notifications, signals, or similar, that are described herein. The controller 35 may be configured to control the communications interface 37 to transmit and/or receive information, data, messages, requests, responses, indications, notifications, signals, or similar, that are described herein.

The communications interface 37 may enable the beverage making machine 10, or components of the beverage making machine 10, to communicate and/or connect in any suitable way. For example, the communications interface 37 may enable the beverage making machine 10, or components of the beverage making machine 10, to communicate and/or connect wirelessly, via a wired connection, or via any other communication (or data transfer) mechanism. In some wireless implementations, for example, the communications interface 37 may enable the beverage making machine 10, or components of the beverage making machine 10, to use radio frequency (RF), Bluetooth, or any other wireless communication technology to communicate and/or connect.

Although the beverage making machine 10 is illustrated in Fig. 1 as comprising a single memory 36, it will be appreciated that the beverage making machine 10 may comprise at least one memory (i.e. a single memory or a plurality of memories) 36 that operates in the manner described herein. Similarly, although the beverage making machine 10 is illustrated in Fig. 1 as comprising a single user interface 18, it will be appreciated that the beverage making machine 10 may comprise at least one user interface (i.e. a single user interface or a plurality of user interfaces) 18 that operates in the manner described herein. Similarly, although the beverage making machine 10 is illustrated in Fig. 1 as comprising a single communications interface 37, it will be appreciated that the beverage making machine 10 may comprise at least one communications interface (i.e. a single communications interface or a plurality of communications interfaces) 37 that operates in the manner described herein.

It will also be appreciated that Fig. 1 only shows the components required to illustrate an embodiment of the beverage making machine 10 and, in practical implementations, the beverage making machine 10 may comprise additional or alternative components to those shown. For example, although not illustrated in Fig. 1, in some embodiments, the beverage making machine 10 may comprise a grinder (e.g. an internal or integrated grinder) for grinding one or more ingredients for the beverage, a chamber in which the beverage is to be prepared, one or more conduits through which fluid is to flow to prepare the beverage, a frother for frothing one or more ingredients for the beverage, and/or a spout for outputting (or dispensing) the beverage.

Fig. 2 illustrates a method 100 according to an embodiment. The method 100 is for operating a beverage making machine 10. The beverage making machine 10 described earlier with reference to Fig. 1 can be configured to operate in accordance with the method. For example, the method 100 can be performed by or under the control of the controller 35 of the beverage making machine 10. The method 100 may be a computer-implemented method.

With reference to Fig. 2, at block 102, a user selection is received. More specifically, the beverage making machine 10 receives the user selection. For example, the controller 35 of the beverage making machine 10 can receive the user selection. In some embodiments, the controller 35 of the beverage making machine 10 may receive the user selection from the user interface 18 of the beverage making machine 10. In other embodiments, the beverage making machine 10 may receive the user selection from a user interface of a UE, e.g. via the communications interface 37 of the beverage making machine 10. The user selection is indicative of a beverage to be prepared by the beverage making machine 10. The user selection may be indicative of a recipe for the beverage. The recipe for the beverage can, for example, comprise an indication of the type of beverage (such as tea or coffee, e.g. black coffee or milky coffee), the volume of the beverage, and/or the temperature of the beverage.

At block 104 of Fig. 2, a start-up operation of the beverage making machine 10 is adjusted based on the user selection. More specifically, the beverage making machine 10 adjusts the start-up operation. For example, the controller 35 of the beverage making machine 10 may adjust the start-up operation. The start-up operation is performed before a beverage making operation of the beverage making machine 10. Advantageously, the user selection is received and the start-up operation is adjusted before the beverage making machine 10 begins the start-up operation.

The start-up operation that is adjusted can be a pre-defined (e.g. pre-set or pre-programmed) start-up operation. For example, the beverage making machine 10 may be configured to perform a default start-up operation and this default start-up operation can be adjusted before the beverage making machine 10 actually begins performing it, or the beverage making machine 10 may be configured to repeat a previously (e.g. last) performed start-up operation and this previously performed start-up operation can be adjusted before the beverage making machine 10 actually begins performing it. A memory 36 of the beverage making machine 10 may store the start-up operation that is subsequently adjusted.

Thus, the user can select a beverage prior to the start-up operation beginning. In some embodiments, the beverage making machine 10 may be configured to allow a user selection to be made directly or immediately after the beverage making machine 10 is switched on. The user selection is taken into account to optimize the start-up operation of the beverage making machine 10. The start-up operation of the beverage making machine 10 can be optimized to suit the beverage that is selected.

In some embodiments, the start-up operation referred to herein may comprise one or more activities for preparing the beverage making machine 10 to prepare the beverage.

In some embodiments, adjusting the start-up operation may comprise any one or more of changing one or more conditions that the beverage making machine 10 is caused to meet when the one or more activities for preparing the beverage making machine 10 are executed; omitting at least one of the one or more activities for preparing the beverage making machine 10; and changing a characteristic of at least one of the one or more activities for preparing the beverage making machine 10.

In some embodiments, the one or more activities for preparing the beverage making machine 10 may comprise any one or more of the following:
- rinsing a chamber (e.g. water reservoir) of the beverage making machine 10 in which the beverage is to be prepared;
- rinsing one or more conduits of the beverage making machine 10 through which fluid is to flow to prepare the beverage;
- heating one or more ingredients for the beverage;
- cooling one or more ingredients for the beverage;
- heating one or more heating components of the beverage making machine 10, wherein the one or more heating components are configured to heat one or more ingredients for the beverage;
- cooling one or more cooling components of the beverage making machine 10, wherein the one or more cooling components are configured to cool one or more ingredients for the beverage;
- setting a grind size for a grinder of the beverage making machine 10, wherein the grinder is configured to grind one or more ingredients;
- grinding one or more ingredients for the beverage;
- compressing one or more ingredients for the beverage;
- positioning one or more components of the beverage making machine 10 (such as positioning the spout of the beverage making machine 10, e.g. relative to a drip tray of the beverage making machine 10);
- outputting one or more signals to the user (e.g. via the user interface 18 of the beverage making machine 10);
- setting a start time for at least one of the one or more activities for preparing the beverage; and
- ordering, into a sequence, two or more activities for preparing the beverage making machine 10.

The rinsing of the chamber and/or the one or more conduits may be a pre-rinse routine to heat up the system. The rinsing may be a full rinse function, e.g. where the spout of the beverage making machine 10 is also rinsed. In that case, a user may be required to place a cup after the rinsing, or the user may be provided with the possibility to switch off the full rinse function. The fluid that is to flow through the one or more conduits of the beverage making machine 10 can be a liquid (e.g. water) or a gas (e.g. steam). The one or more ingredients that are heated and/or cooled can comprise water according to some embodiments. The one or more heating components can be one or more heaters. The one or more signals that are output to a user can comprise, for example, one or more messages and/or feedback (such as text, light, and/or sound).

In some embodiments, any one or more of the following may apply:
- the one or more activities for preparing the beverage making machine 10 may comprise rinsing the chamber and adjusting the start-up operation (or, more specifically, omitting at least one of the one or more activities for preparing the beverage making machine 10) may comprise omitting rinsing the chamber or adjusting the start-up operation (or, more specifically, changing a characteristic of at least one of the one or more activities for preparing the beverage making machine 10) may comprise changing a characteristic of rinsing the chamber;
- the one or more activities for preparing the beverage making machine 10 may comprise rinsing the one or more conduits and adjusting the start-up operation (or, more specifically, omitting at least one of the one or more activities for preparing the beverage making machine 10) may comprise omitting rinsing the one or more conduits or adjusting the start-up operation (or, more specifically, changing a characteristic of at least one of the one or more activities for preparing the beverage making machine 10) may comprise changing a characteristic of rinsing the one or more conduits;
- the one or more activities for preparing the beverage making machine 10 may comprise heating the one or more ingredients and adjusting the start-up operation (or, more specifically, omitting at least one of the one or more activities for preparing the beverage making machine 10) may comprise omitting heating the one or more ingredients or adjusting the start-up operation (or, more specifically, changing one or more conditions) may comprise changing a first pre-set temperature up to which the one or more ingredients are (e.g. partially) heated;
- the one or more activities for preparing the beverage making machine 10 may comprise cooling the one or more ingredients and adjusting the start-up operation (or, more specifically, omitting at least one of the one or more activities for preparing the beverage making machine 10) may comprise omitting cooling the one or more ingredients or adjusting the start-up operation (or, more specifically, changing one or more conditions) may comprise changing a second pre-set temperature down to which the one or more ingredients are cooled;
- the one or more activities for preparing the beverage making machine 10 comprise heating the one or more heating components of the beverage making machine 10 and adjusting the start-up operation (or, more specifically, omitting at least one of the one or more activities for preparing the beverage making machine 10) comprises omitting heating the one or more heating components of the beverage making machine 10 or adjusting the start-up operation (or, more specifically, changing one or more conditions) may comprise changing a third pre-set temperature up to which the one or more heating components are heated;
- the one or more activities for preparing the beverage making machine 10 comprise cooling the one or more heating components of the beverage making machine 10 and adjusting the start-up operation (or, more specifically, omitting at least one of the one or more activities for preparing the beverage making machine 10) comprises omitting cooling the one or more heating components of the beverage making machine 10 or adjusting the start-up operation (or, more specifically, changing one or more conditions) may comprise changing a fourth pre-set temperature up to which the one or more cooling components are heated;
- the one or more activities for preparing the beverage making machine 10 comprise setting the grind size and adjusting the start-up operation (or, more specifically, changing one or more conditions) comprises increasing or decreasing the grind size;
- the one or more activities for preparing the beverage making machine 10 comprise grinding one or more ingredients for the beverage and adjusting the start-up operation (or, more specifically, omitting at least one of the one or more activities for preparing the beverage making machine 10) comprises omitting the grinding or adjusting the start-up operation (or, more specifically, changing a characteristic of at least one of the one or more activities for preparing the beverage making machine 10) comprises starting the grinding earlier or later;
- the one or more activities for preparing the beverage making machine 10 comprise compressing one or more ingredients for the beverage and adjusting the start-up operation (or, more specifically, omitting at least one of the one or more activities for preparing the beverage making machine 10) comprises omitting the compressing or adjusting the start-up operation (or, more specifically, changing a characteristic of at least one of the one or more activities for preparing the beverage making machine 10) comprises starting the compressing earlier or later;
- the one or more activities for preparing the beverage making machine 10 comprise positioning the one or more components and adjusting the start-up operation (or, more specifically, changing one or more conditions) comprises changing a position into which the one or more components are positioned (e.g. the one or more components can comprise the spout and changing a position into which the spout is positioned can comprise increasing or decreasing a height at which the spout is positioned);
- the one or more activities for preparing the beverage making machine 10 comprise outputting the one or more signals and adjusting the start-up operation (or, more specifically, omitting at least one of the one or more activities for preparing the beverage making machine 10) comprises omitting outputting the one or more signals or adjusting the start-up operation (or, more specifically, changing a characteristic of at least one of the one or more activities for preparing the beverage making machine 10) may comprise changing the one or more signals;
- the one or more activities for preparing the beverage making machine 10 comprise setting the start time and adjusting the start-up operation (or, more specifically, changing a characteristic of at least one of the one or more activities for preparing the beverage making machine 10) comprises changing the start time; and
- the one or more activities for preparing the beverage making machine 10 comprise ordering, into the sequence, the two or more activities for preparing the beverage making machine 10 and adjusting the start-up operation (or, more specifically, changing a characteristic of at least one of the one or more activities for preparing the beverage making machine 10) comprises changing the sequence.

The characteristic of rinsing the chamber can, for example, be a duration (or length) of rinsing the chamber and/or a volume of a rinsing agent (e.g. water, such as hot water or cold water) used to rinse the chamber. The volume of rinsing agent, for example, may not exceed the volume of the chamber that it is used to rinse, e.g. to avoid the rinsing agent being expelled from a spout of the beverage making machine 10. The volume of rinsing agent can also be referred to as the size of the rinse. This can be optimized. For example, a 40 ml espresso requires more pre-heating compared to a 50 ml espresso. The duration of rinsing may be adjusted according to the recipe for the beverage. The need for a (pre-)rinse can be determined based on transfer functions between a required minimal first cup-in-cup temperature and drink volumes. This can help to provide an acceptable in-cup beverage temperature. An in-cup beverage temperature can be different from a control temperature.

In some embodiments, adjusting the start-up operation of the beverage making machine 10 based on the user selection can comprise adjusting the start-up operation of the beverage making machine 10 if the user selection is indicative that one or more criteria are met. For example, in some embodiments, any one or more of the following may apply:
- rinsing (e.g. with water, such as hot water) the chamber may be omitted if the user selection is indicative that the beverage is to have a volume greater than a pre-set volume (e.g. longer hot beverages may not require the chamber to be rinsed with hot water to deliver the optimal beverage temperature), the beverage is to have a temperature less than the first pre-set temperature (e.g. colder beverages may not require the chamber to be rinsed with hot water to deliver the optimal beverage temperature), the beverage is to have a temperature less than the second pre-set temperature, and/or the beverage is to be prepared in an energy saving mode;
- rinsing (e.g. with water, such as hot water) the one or more conduits may be omitted if the user selection is indicative that the beverage is to have a volume greater than a pre-set volume (e.g. longer hot beverages may not require the one or more conduits to be rinsed with hot water to deliver the optimal beverage temperature), the beverage is to have a temperature less than the first pre-set temperature (e.g. colder beverages may not require the one or more conduits to be rinsed with hot water to deliver the optimal beverage temperature), the beverage is to have a temperature less than the second pre-set temperature, and/or the beverage is to be prepared in an energy saving mode;
- heating the one or more ingredients may be omitted if the user selection is indicative that the beverage is to have a temperature less than the first pre-set temperature (e.g. the beverage is to be a cold beverage, such as a cold brew);
- cooling the one or more ingredients may be omitted if the user selection is indicative that the beverage is to have a temperature greater than the second pre-set temperature;
- the first pre-set temperature may be changed if the user selection is indicative that the beverage is to have a temperature different from the first pre-set temperature;
- the second pre-set temperature may be changed if the user selection is indicative that the beverage is to have a temperature different from the second pre-set temperature;
- heating the one or more heating components may be omitted if the user selection is indicative that the beverage is to have a temperature less than the third pre-set temperature;
- cooling the one or more heating components may be omitted if the user selection is indicative that the beverage is to have a temperature greater than the fourth pre-set temperature;
- the third pre-set temperature may be changed if the user selection is indicative that the beverage is to have a temperature different from the third pre-set temperature;
- the fourth pre-set temperature may be changed if the user selection is indicative that the beverage is to have a temperature different from the fourth pre-set temperature;
- the grind size may be increased if the user selection is indicative that a larger grid size a required;
- the grind size may be decreased if the user selection is indicative that a smaller grid size a required;
- the grinding may be omitted if the user selection is indicative that the beverage is to be prepared without grinding, the grinding may be started earlier (e.g. at a time when rinsing is due to occur) if the user selection is indicative that the beverage is to be prepared without rinsing (e.g. the chamber and/or the one or more conduits), or the grinding may be started later (e.g. after rinsing is complete) if the user selection is indicative that the beverage is to be prepared with rinsing (e.g. the chamber and/or the one or more conduits);
- the compressing may be omitted if the user selection is indicative that the beverage is to be prepared without compressing, the compressing may be started earlier (e.g. at a time when rinsing is due to occur) if the user selection is indicative that the beverage is to be prepared without rinsing (e.g. the chamber and/or the one or more conduits), or the compressing may be started later (e.g. after rinsing is complete) if the user selection is indicative that the beverage is to be prepared with rinsing (e.g. the chamber and/or the one or more conduits);
- the position of the one or more components may be changed if the user selection is indicative that preparation of the beverage requires the one or more components to be positioned differently (e.g. the height of the spout may be increased if the user selection is indicative that a height of a cup for the beverage is greater than the height of the spout or the height of the spout may be decreased if the user selection is indicative that a height of a cup for the beverage is less than the height of the spout);
- the start time may be changed if the user selection is indicative that the beverage requires more or less of the one or more activities for preparing the beverage making machine 10 to be performed; and
- the two or more activities may be reordered into an updated sequence if the user selection is indicative that preparation of the beverage requires the two or more activities to be performed in a different order.

In some embodiments, the beverage making operation may comprise one or more activities for preparing the beverage. In some embodiments, the one or more activities for preparing the beverage may comprise any one or more of the following:
- heating one or more ingredients for the beverage;
- cooling one or more ingredients for the beverage;
- grinding one or more ingredients for the beverage;
- compressing one or more ingredients for the beverage;
- mixing two or more ingredients for the beverage;
- frothing one or more ingredients for the beverage;
- brewing the beverage;
- adding flavors to the beverage;
- adding one or more gases (e.g. carbon dioxide, CO2) to the beverage;
- dispensing the beverage; and
- dispensing steam for the beverage.

In some embodiments, the start-up operation may be performed after an initialization operation of the beverage making machine 10. In some embodiments, the initialization operation may comprise one or more activities for initializing the beverage making machine 10. In some embodiments, the one or more activities for initializing the beverage making machine 10 may comprise any one or more of the following:
- switching on the beverage making machine 10;
- starting a controller 35 configured to control the operation of the beverage making machine 10;
- starting a user interface 18 for receiving the user selection;
- checking a condition (e.g. status) of one or more components (e.g. a brew chamber) of the beverage making machine 10; and
- checking (key) alarms.

Although not illustrated in Fig. 2, in some embodiments, the method may comprise, if an error is detected during the initialization operation, outputting an alert signal to indicate that the error is detected and/or disabling the user selection until the error is resolved.

Herein, the initialization operation can be referred to as a first stage of operation, the start-up operation can be referred to as a second stage of operation, and the beverage making operation can be referred to as a third stage of operation. The initialization operation is performed first, the start-up operation is performed second, and the beverage making operation is performed third. For example, the initialization operation can be performed initially (e.g. once, or automatically once, the beverage making machine 10 is turned on), the start-up operation can be performed (e.g. automatically) once the initialization operation is complete, and the beverage making operation can be performed (e.g. automatically) once the start-up operation is complete. The initialization operation can also be referred to as an initialization phase or initialization stage. The start-up operation can also be referred to as a start-up phase or start-up stage. The beverage making operation can also be referred to as a beverage making phase or beverage making stage.

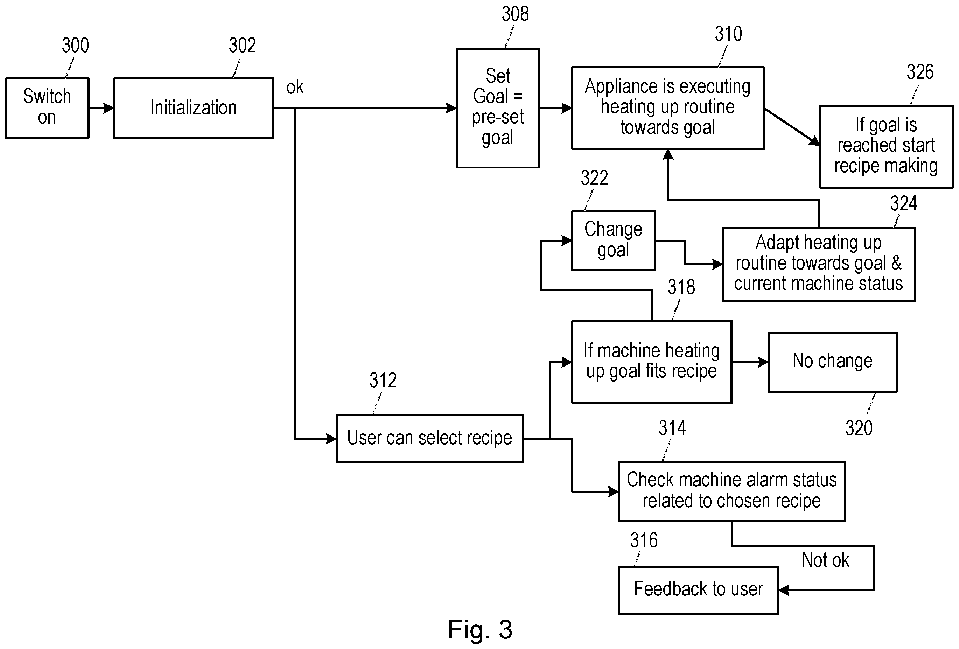

Fig. 3 illustrates a method according to an embodiment. The method is for operating a beverage making machine 10. The beverage making machine 10 described earlier with reference to Fig. 1 can be configured to operate in accordance with the method. For example, the method can be performed by or under the control of the controller 35 of the beverage making machine 10. The method may be a computer-implemented method.

At step 300 of Fig. 3, the beverage making machine 10 is switched on. At step 302 of Fig. 3, an initialization operation is performed to initialize the beverage making machine 10, such as in the manner described herein. For example, the initialization operation may include initializing (e.g. starting) the controller 35 of the beverage making machine 10 and/or initializing (e.g. starting) the user interface (UI) 18 of the beverage making machine 10. Although the switching on of the beverage making machine 10 is illustrated as a separate step 300 to the initialization operation 302 in the embodiment illustrated in Fig. 3, the initialization operation can comprise switching on the beverage making machine 10 according to other embodiments.

At step 308 of Fig. 3, one or more conditions (or goals) are set. Examples of the one or more conditions include, but are not limited to, any of those mentioned earlier, such as the first pre-set temperature up to which the one or more ingredients are (e.g. partially) heated or the second pre-set temperature down to which the one or more ingredients are cooled, the third pre-set temperature up to which the one or more heating components are heated or the fourth pre-set temperature up to which the one or more cooling components are heated, the grind size, the position into which the one or more components are positioned, and/or any other condition(s).

In some embodiments, one or more conditions may be set based on previous user behavior and/or previous beverage making machine 10 usage. For example, one or more conditions may be set based on a user selection that has been most frequently received by the beverage making machine 10 (e.g. as stored in the memory 36 of the beverage making machine 10).

In the illustrated embodiment of Fig. 3, one or more conditions are set subsequent to the beverage making machine 10 being switched on and the initialization operation having been performed. However, in other embodiments, one or more conditions may be set prior to one or both of the beverage making machine 10 being switched on and the initialization operation having been performed. For example, in some embodiments, one or more conditions may be one or more factory-set (or default) conditions or one or more conditions that the beverage making machine 10 is pre-configured with. Some examples of a pre-set condition include, but are not limited to, a factory setting for a heating up route towards a factory setting temperature, a condition that is adapted towards user behavior/machine usage (e.g. the drink most chosen as a first drink), and a pre-set condition adapted towards a user preferred setting.

The beverage making machine 10 can be configured with a start-up operation at step 308 of Fig. 3. The start-up operation comprises one or more activities for preparing the beverage making machine 10 to prepare a beverage, such as any one or more of those mentioned earlier. The beverage making machine 10 may be prepared (or ready) to prepare a beverage once the one or more conditions are met, e.g. once the first or second pre-set temperature is reached, the third or fourth pre-set temperature is reached, the grind size is set, the one or more components are in position, and/or similar. Thus, the start-up operation or, more specifically, the one or more activities of the start-up operation can be executed to cause the beverage making machine 10 to meet the one or more conditions.

At step 310 of Fig. 3, the beverage making machine 10 executes the start-up operation to prepare the beverage making machine 10 to prepare a beverage, such as in the manner described herein. For example, executing the start-up operation can comprise executing (or performing) the one or more activities for preparing the beverage making machine 10 to prepare the beverage. As mentioned earlier, the one or more activities can be executed to cause the beverage making machine 10 to meet the one or more conditions. The start-up operation may thus end once the one or more conditions are met.

However, as will be explained later with reference to steps 322 and 324 of Fig. 3, before the beverage making machine 10 actually begins the start-up operation at step 310 of Fig. 3, the start-up operation is adjusted based on a (current) user selection indicative of the beverage that is to be prepared by the beverage making machine 10.

At step 312 of Fig. 3, the user selection, which is indicative of a beverage to be prepared, is received. For example, the user may select the beverage or a recipe for the beverage. The user may be able to make a selection (e.g. immediately) once the beverage making machine 10 is switched on.

At step 314 of Fig. 3, an alarm status of the beverage making machine 10 may be checked in relation to the user selection. For example, a condition of one or more components of the beverage making machine 10 may be checked in relation to the user selection, e.g. a level (or amount) of one or more ingredients (e.g. water and/or beans) in one or more chambers (e.g. reservoirs or tanks) of the beverage making machine 10 may be checked to detect whether it meets a minimum level required to prepare the beverage indicated by the user selection. The beverage making machine 10 may comprise one or more sensors for detecting the condition of one or more components of the beverage making machine 10.

If an error is detected at step 314 of Fig. 3, the method proceeds to step 316 of Fig. 3. At step 316 of Fig. 3, feedback may be provided to the user. For example, the feedback may comprise outputting (e.g. via the user interface 18 of the beverage making machine 10) an alert signal (e.g. an alarm) to indicate that the error is detected. The alert signal can identify the error or provide a solution for the error. In the example where a level of one or more ingredients in one or more chambers of the beverage making machine 10 is checked, the alert signal may be output if the level of the one or more ingredients detected is too low (e.g. less than the minimum level required) to prepare the beverage. The alert signal can identify that the level of the one or more ingredients is too low or indicate that one or more chambers need to be refilled. Thus, a user can be warned if an error is detected that will prevent completion of preparation of their selected beverage.

At step 318 of Fig. 3, a determination may be performed to determine whether the start-up operation is to be adjusted based on the user selection. For example, the beverage making machine 10 may be configured with a start-up operation (at step 308 of Fig. 3) and the determination may determine whether this start-up operation is suitable for configuring the beverage making machine 10 to prepare the beverage indicated by the user selection or is to be adjusted.

If, at step 318 of Fig. 3, it is determined that no adjustment is to be made to the start-up operation, the method proceeds to step 320 of Fig. 3. At step 320 of Fig. 3, the start-up operation is unchanged. If, at step 318 of Fig. 3, it is determined that the start-up operation is to be adjusted based on the user selection, the method proceeds to step 322 of Fig. 3.

At step 322 of Fig. 3, at least one of the one or more conditions mentioned earlier may be adjusted (or changed) based on the user selection (e.g. if one or more conditions are not optimal or suitable for preparing the beverage indicated by the user selection, those one or more conditions can be adjusted). At step 324 of Fig. 3, the start-up operation is adjusted based on the user selection. For example, the start-up operation may be adjusted such that the one or more activities, when executed, cause the beverage making machine 10 to meet the one or more adjusted conditions, at least one of the one or more activities for preparing the beverage making machine 10 may be omitted based on the user selection (e.g. if one or more activities are not relevant or are unnecessary for preparing the beverage indicated by the user selection, those one or more activities can be omitted), and/or a characteristic of at least one of the one or more activities for preparing the beverage making machine 10 may be changed based on the user selection (e.g. if one or more activities are not optimal or are not suitable for preparing the beverage indicated by the user selection, a characteristic of those one or more activities can be changed). Any one or more of the earlier described examples of the start-up operation adjustment may apply.

Thus, at step 310 of Fig. 3, the adjusted start-up operation begins. That is, at step 310 of Fig. 3, the beverage making machine 10 executes the adjusted start-up operation to prepare the beverage making machine 10 to prepare the beverage, such as in the manner described herein. For example, executing the start-up operation can comprise executing (or performing) the one or more activities for preparing the beverage making machine 10. The one or more activities can be executed to cause the beverage making machine 10 to meet the one or more adjusted conditions.

Any one or more of the earlier described activities may be executed. For example, the beverage making machine 10 may perform heating until a new (selected) heating goal is reached, or the beverage making machine 10 may perform cooling if the actual temperature of one or more components of the beverage making machine 10 is higher than the new (selected) heating goal.

Therefore, in the manner described, the beverage making machine 10 is able to adapt its starting-up behavior based on the received user selection. More specifically, the beverage making machine 10 can adapt towards a selected beverage or a selected recipe for the beverage.

At step 326 of Fig. 3, if the one or more (adjusted) conditions are met, the beverage making machine 10 begins a beverage making operation in which the beverage is prepared. For example, if the user selects a lower-temperature beverage, the beverage making machine 10 can stop heating up once the ideal temperature has been reached for that beverage.

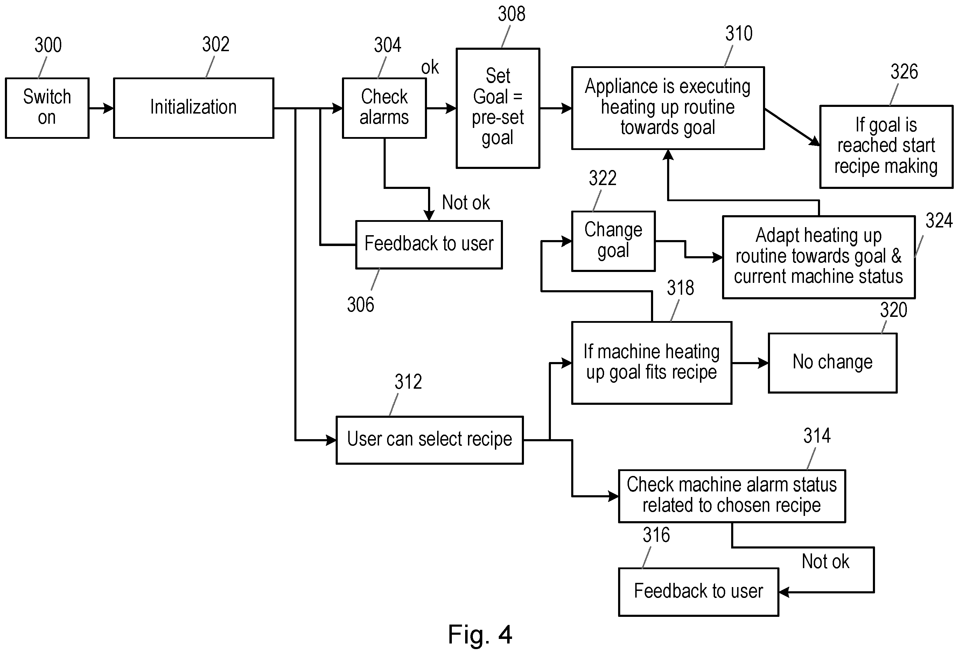

Fig. 4 illustrates a method according to an embodiment. The method is for operating a beverage making machine 10. The beverage making machine 10 described earlier with reference to Fig. 1 can be configured to operate in accordance with the method. For example, the method can be performed by or under the control of the controller 35 of the beverage making machine 10. The method may be a computer-implemented method.

The method steps corresponding to blocks 300, 302 and 308-326 of Fig. 4 are as described with reference to blocks 300, 302 and 308-326 of Fig. 3 respectively. The corresponding description of blocks 300, 302 and 308-326 of Fig. 3 will therefore be understood to apply to blocks 300, 302 and 308-326 of Fig. 4 respectively.

In addition, in the method illustrated in Fig. 4, one or more checking steps are performed. At step 304 of Fig. 4, an alarm status of the beverage making machine 10 may be checked. For example, a condition of one or more components of the beverage making machine 10 may be checked. A condition of one or more components of the beverage making machine 10 may, for example, be a level (or amount) of one or more ingredients (e.g. water and/or beans) in one or more chambers (e.g. reservoirs or tanks) of the beverage making machine 10. The beverage making machine 10 may comprise one or more sensors for detecting the condition of one or more components of the beverage making machine 10.

If no error is detected at step 304 of Fig. 4, the method proceeds to step 308 of Fig. 4. If an error is detected at step 304 of Fig. 4, the method proceeds to step 306 of Fig. 4. At step 306 of Fig. 4, feedback may be provided to the user. For example, the feedback may comprise outputting an alert signal (e.g. an alarm) to indicate that the error is detected and/or disabling the user selection until the error is resolved. The alert signal can identify the error or provide a solution for the error. In the example where a level of one or more ingredients in one or more chambers of the beverage making machine 10 is checked, the alert signal may be output if the level of the one or more ingredients detected is low (e.g. less than a minimum threshold level) or if the one or more chambers are empty. The alert signal can identify that the level of the one or more ingredients is too low or indicate that one or more chambers need to be refilled. With regard to disabling the user selection until the error is resolved, it may be that the user selection can be made but the user may need to address the alert signal. The alert signal at step 306 can be in the form of text, light, and/or sound (e.g. via the user interface 18 of the beverage making machine 10).

Although the alarm status check and feedback are illustrated as separate steps 304, 306 to the initialization operation 302 in the embodiment illustrated in Fig. 4, the initialization operation can comprise these steps according to other embodiments.

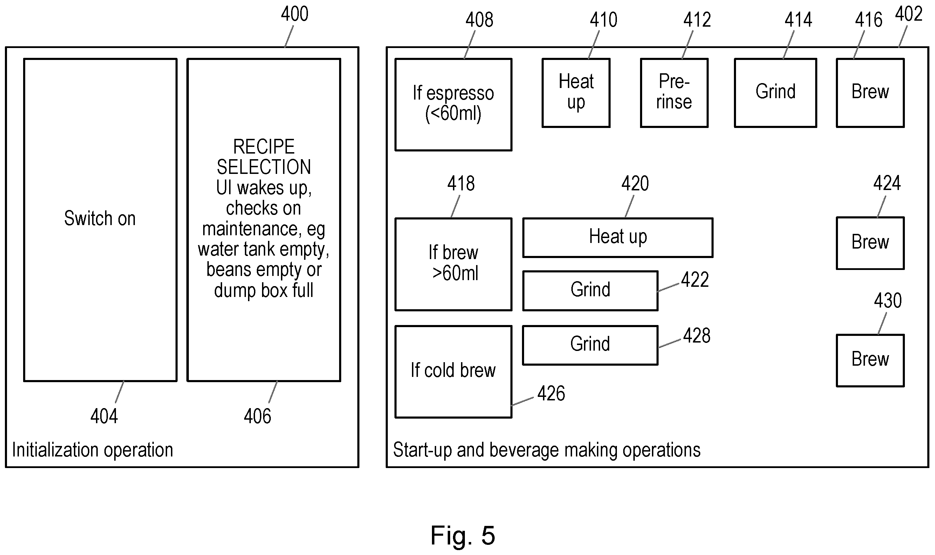

Fig. 5 illustrates a method according to an embodiment. The method is for operating a beverage making machine 10. The beverage making machine 10 described earlier with reference to Fig. 1 can be configured to operate in accordance with the method. For example, the method can be performed by or under the control of the controller 35 of the beverage making machine 10. The method may be a computer-implemented method. The method shown in Fig. 5 illustrates the manner in which a start-up operation of the beverage making machine 10 can be adjusted based on a user selection.

As illustrated in Fig. 5, the beverage making machine 10 according to this embodiment has two stages of operation, which will be referred to as a first stage of operation 400 and a second stage of operation 402. The first stage of operation 400 comprises the initialization operation referred to herein. The initialization operation comprises one or more activities 404, 406 for initializing the beverage making machine 10. The second stage of operation 402 comprises the start-up operation referred to herein and may optionally also comprise the beverage making operation referred to herein. The start-up operation comprises one or more activities 408-414, 418-422, or 426-428 for preparing the beverage making machine 10 to prepare the beverage. The beverage making operation comprises one or more activities 416, 424, 430 for preparing the beverage.

At block 404 of Fig. 5, the beverage making machine 10 is switched on. At block 406 of Fig. 5, the beverage making machine 10 receives a user selection indicative of a beverage to be prepared. As such, as illustrated in Fig. 5, the user selection is received in the first stage of operation 400 in which the initialization operation is executed, which is before the second stage of operation 402 in which the start-up operation is executed. That is, the user selection is received before the beverage making machine 10 begins the start-up operation.

At block 406 of Fig. 5, one or more activities for initializing the beverage making machine 10 may be performed. The one or more activities may comprise starting (or waking up) the user interface 18 of the beverage making machine 10 for receiving a user selection. Alternatively, or in addition, the one or more activities may comprise checking a condition of one or more components of the beverage making machine 10. As such, the beverage making machine 10 can perform maintenance checks, such as checking a condition of one or more chambers of the beverage making machine 10, such as a water reservoir/tank of the beverage making machine 10 (e.g. whether the water reservoir/tank is empty), a bean reservoir/tank of the beverage making machine 10 (e.g. whether the bean reservoir/tank is empty), and/or a waste bin of the beverage making machine 10 (e.g. whether the waste bin is full).

If an error is detected during the initialization operation at step 406 of Fig. 5, the beverage making machine 10 may output an alert signal (e.g. via the user interface 18 of the beverage making machine) to indicate that the error is detected, and/or disable the user selection until the error is resolved. In a particular example, if the checking reveals an error indicating that the water reservoir/tank is empty, the alert signal may indicate that the user needs to top-up (i.e. increase the level of) the water in order to resolve the error. In other examples, the alert signal may indicate that the bean reservoir/tank needs to be topped-up and/or that the waste bin needs to be emptied.

In some embodiments, the beverage making machine 10 may only receive the user selection after any errors are resolved. That is, in some examples, the user may not be able to make a selection (e.g. of a beverage) until any errors detected by the beverage making machine 10 are resolved. Alternatively, in other embodiments, checking a condition of one or more components may be performed after receipt of the user selection. In these embodiments, the checking of the one or more components can be performed in relation to (e.g. adapted according to) the user selection.

Although not illustrated in Fig. 5, the beverage making machine 10 may receive an input confirming the received user selection. For example, the user may be required to press a button (e.g. a play button) on the user interface 18 of the beverage making machine 10 in order to confirm the received user selection. As such, in some examples, receiving the user selection may comprise receiving one or more inputs. In some embodiments, if the input confirming the user selection is not received within a set period of time (e.g. 60 seconds) after receipt of the user selection, the beverage making machine 10 may enter into a third stage of operation, namely a standby operation, in order to save energy.

Once the initialization operation of the first stage of operation 400 is complete, the beverage making machine 10 enters the second stage of operation 402 in which it begins the start-up operation. Thus, the start-up operation is performed after the initialization operation. In an example, the second stage of operation 402 can be entered in response to the receipt of the user selection or in response to the input confirming the received user selection. However, as described herein, before the beverage making machine 10 actually begins the start-up operation, the start-up operation is adjusted based on the user selection.

The method steps shown in block 402 of Fig. 5 illustrate different examples of how the start-up operation may be adjusted based on the user selection. In particular, Fig. 5 illustrates three examples, which are represented by blocks 408-414 of Fig. 5 ("first example"), blocks 418-422 of Fig. 5 ("second example"), and blocks 426-428 of Fig. 5 ("third example").

In the first example, at block 408 of Fig. 5, the user selection is indicative that the beverage to be prepared by the beverage making machine 10 is an espresso. The start-up operation of the beverage making machine 10 is thus adjusted based on this user selection. In an example, the beverage making machine 10 may identify the recipe associated with the beverage from the user selection and adjust the start-up operation based on the identified recipe. As illustrated by blocks 410, 412 and 414 of Fig. 5, the adjusted start-up operation comprises three activities for preparing the beverage making machine 10 to prepare the beverage (an espresso).

At block 410 of Fig. 5, one or more ingredients (e.g. water) for the beverage are heated. For example, one or more heating components (e.g. a heater) of the beverage making machine 10 can be heated to heat the one or more ingredients. The heating is performed since the beverage to be prepared is a hot beverage. The user selection may be indicative of a target temperature for the beverage (or, more specifically, the water for the beverage) and this may be greater than a pre-set temperature (e.g. a predefined value). The start-up operation can thus be adjusted to heat one or more ingredients for the beverage up to the target temperature instead of the pre-set temperature. Therefore, in the first example, the start-up operation is adjusted based on the temperature that the beverage is to have.

At block 412 of Fig. 5, a chamber of the beverage making machine 10, in which the beverage is to be prepared, is rinsed and/or one or more conduits of the beverage making machine 10, through which fluid is to flow to prepare the beverage, are rinsed. The user selection may be indicative of a target volume for the beverage and this may be less than a pre-set volume (e.g. 60 ml) at which rinsing is to be omitted. The start-up operation can thus be adjusted to comprise a rinsing (or pre-rinsing) process. The rinsing process may be performed in such a way that no water comes from the spout of the beverage making machine. Therefore, in the first example, the start-up operation can be adjusted based on the volume that the beverage is to have.

In the example illustrated in Fig. 5, the pre-set volume is 60 ml. However it will be understood that the pre-set volume can be any pre-set volume, such as 10 ml, 20 ml, 30 ml, 40 ml, 50 ml, 60 ml, 70 ml, 80 ml, 90 ml, 100 ml etc.

One or more rinsing activities performed during the start-up operation can be referred to herein as a pre-rinse. A pre-rinse can be performed when the beverage to be prepared has a small volume (e.g. less than a pre-set volume, such as 60ml). The pre-rinse helps to prevent the temperature of the prepared beverage being undesirably reduced during beverage preparation. For example, small amounts of fluid (e.g. water) for preparing a hot beverage (e.g. hot coffee) may easily cool down when transported to a chamber and/or through a conduit of the beverage making machine 10 (e.g. if the chamber and/or conduit are initially at room temperature, such as around 20°C). When the beverage making machine 10 is switched on, it is likely that one or more chambers and/or one or more conduits of the beverage making machine 10 will be at room temperature, which is cool in comparison to the temperature of a hot beverage (e.g. espresso). Thus, pre-rinsing (e.g. with a hot fluid, such as water) can help to overcome this undesirable cooling effect.

At block 414 of Fig. 5, the beverage making machine 10 grinds one or more ingredients for the beverage. The user selection may be indicative of a type of beverage that requires the grinding of one or more ingredients. The start-up operation can thus be adjusted to comprise a grinding process. In the first example, the type of beverage is a coffee and thus the start-up operation is adjusted to comprise grinding coffee beans. Therefore, in the first example, the start-up operation can be adjusted based on the type of beverage.

At block 416 of Fig. 5, the beverage making operation begins, whereby the beverage making machine 10 prepares the beverage. In the first example, the beverage making operation comprises brewing coffee. In some examples, the brewing may only begin once the target temperature is reached.

In the second example, at block 418 of Fig. 5, the user selection is indicative that the beverage to be prepared by the beverage making machine 10 is a hot coffee. The start-up operation of the beverage making machine 10 is thus adjusted based on this user selection. In an example, the beverage making machine 10 may identify the recipe associated with the beverage from the user selection and adjust the start-up operation based on the identified recipe. As illustrated by blocks 420 and 422 of Fig. 5, the adjusted start-up operation comprises two activities for preparing the beverage making machine 10 to prepare the beverage (a hot coffee).

At block 420 of Fig. 5, one or more ingredients (e.g. water) for the beverage are heated. For example, one or more heating components (e.g. a heater) of the beverage making machine 10 can be heated to heat the one or more ingredients. The heating is performed since the beverage to be prepared is a hot beverage. The user selection may be indicative of a target temperature for the beverage (or, more specifically, the water for the beverage) and this may be greater than a pre-set temperature (e.g. a predefined value). The start-up operation can thus be adjusted to heat one or more ingredients for the beverage up to the target temperature instead of the pre-set temperature. Therefore, in the second example, the start-up operation can be adjusted based on the temperature that the beverage is to have.

In the second example, the start-up operation is adjusted to omit rinsing activities. The user selection may be indicative of a target volume for the beverage and this may be greater than a pre-set volume (e.g. 60 ml) at which rinsing is to be omitted. Therefore, in the second example, the start-up operation can be adjusted based on the volume that the beverage is to have. For beverages with a larger volume, the cooling effect as described above with reference to block 412 of Fig. 5 is less prominent than for beverages with relatively smaller volume.

At block 422 of Fig. 5, the beverage making machine 10 grinds one or more ingredients for the beverage. The user selection may be indicative of a type of beverage that requires the grinding of one or more ingredients. The start-up operation can thus be adjusted to comprise a grinding process. In the second example, the type of beverage is a coffee and thus the start-up operation is adjusted to comprise grinding coffee beans. Therefore, in the second example, the start-up operation can be adjusted based on the type of beverage.

At block 424 of Fig. 5, the beverage making operation begins, whereby the beverage making machine 10 prepares the beverage. In the second example, the beverage making operation comprises brewing coffee. In some examples, the brewing may only begin once grinding is complete and the target temperature is reached.

In the second example, the heating described with reference to block 420 of Fig. 5 and the grinding described with reference to block 422 of Fig. 5 can be performed at the same time (or in parallel). Indeed, since rinsing is omitted from the second example, there is no rinsing of the brew chamber prior to brewing and thus grinding into the brew chamber can be performed at the same time as heating. That is, the grinder can grind into the brew chamber at the time of heating one or more ingredients in the brew chamber as the brew chamber does not need to move, since there will be no waste rinsing agent (e.g. water) to remove from the brew chamber.

In the third example, at block 426 of Fig. 5, the user selection is indicative that the beverage to be prepared by the beverage making machine 10 is a cold coffee. The start-up operation of the beverage making machine 10 is thus adjusted based on this user selection. In an example, the beverage making machine 10 may identify the recipe associated with the beverage from the user selection and adjust the start-up operation based on the identified recipe. As illustrated by block 428 of Fig. 5, the adjusted start-up operation comprises one activity for preparing the beverage making machine 10 to prepare the beverage (a cold coffee).

That is, at block 428 of Fig. 5, the beverage making machine 10 grinds one or more ingredients for the beverage. The user selection may be indicative of a type of beverage that requires the grinding of one or more ingredients. The start-up operation can thus be adjusted to comprise a grinding process. In the third example, the type of beverage is a coffee and thus the start-up operation is adjusted to comprise grinding coffee beans. Therefore, in the third example, the start-up operation can be adjusted based on the type of beverage.

In the third example, the start-up operation is adjusted to omit heating activities, since the user selection is indicative that the beverage is a cold beverage. In the third example, the start-up operation is also adjusted to omit rinsing activities. There is no need to perform rinsing since the cooling effect, as described with reference to block 412 of Fig. 5, does not adversely impact the preparation of a cold beverage.

At block 430 of Fig. 5, the beverage making operation begins, whereby the beverage making machine 10 prepares the beverage. In the third example, the beverage making operation comprises brewing the coffee. In some examples, the brewing may only begin once grinding is complete.

Therefore, the first, second and third examples as described above with reference to Fig. 5 illustrate the manner in which the start-up operation of the beverage making machine 10 may be adjusted (in different ways) based on the user selection.

Although the start-up operation comprises the activity of grinding one or more ingredients in the embodiment illustrated in Fig. 5, it will be understood that the beverage making operation referred to herein may instead comprise the activity of grinding one or more ingredients according to other embodiments. For example, in other embodiments, the beverage making operation referred to herein may comprise a combined grind and brew cycle. In yet other embodiments, the start-up operation referred to herein may comprise the activity of partly grinding one or more ingredients and the beverage making operation may comprise completing the grinding of the one or more ingredients. In other embodiments, the start-up operation referred to herein may comprise the activity of grinding one or more ingredients and the activity of brewing the beverage. For example, in other embodiments, the start-up operation referred to herein may comprise a combined grind and brew cycle.

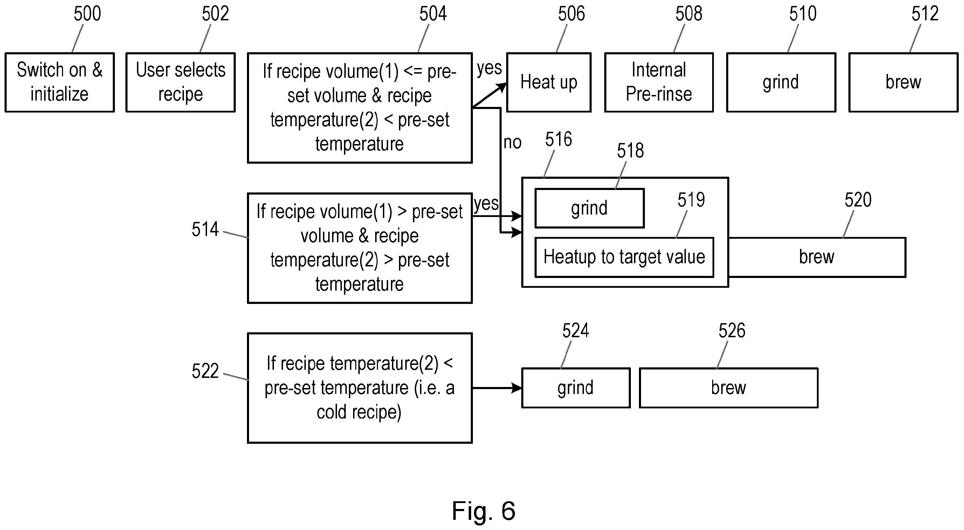

Fig. 6 illustrates a method according to an embodiment. The method is for operating a beverage making machine 10. The beverage making machine 10 described earlier with reference to Fig. 1 can be configured to operate in accordance with the method. For example, the method can be performed by or under the control of the controller 35 of the beverage making machine 10. The method may be a computer-implemented method. The method shown in Fig. 6 illustrates the manner in which a start-up operation of the beverage making machine 10 can be adjusted based on the user selection.

As illustrated in Fig. 6, the start-up operation of the beverage making machine 10 comprises one or more activities 506-510, 516-519, or 524 for preparing the beverage making machine 10 to prepare a beverage. In the method illustrated by Fig. 6, the beverage making machine 10 is configured with a pre-set temperature (referred to herein as the first pre-set temperature) up to which one or more ingredients for the beverage are heated and a pre-set volume for the beverage. Fig. 6 illustrates different examples of how the start-up operation may be adjusted based on the user selection. In particular, Fig. 6 illustrates three examples, which are represented by blocks 504-510 of Fig. 6 ("fourth example"), blocks 514-519 of Fig. 6 ("fifth example"), and blocks 522-524 of Fig. 6 ("sixth example").

At block 500 of Fig. 6, the beverage making machine 10 is switched on and performs an initialization operation as described herein. In an example, the pre-set temperature and the pre-set volume can be configured during the initialization operation. For example, the pre-set temperature and the pre-set volume may be stored in the memory 36 of the beverage making machine 10. Although not illustrated in Fig. 6, the beverage making machine 10 can operate in an energy saving mode. The beverage making machine 10 can be pre-configured to (e.g. automatically) initialize the energy saving mode after being switched on, and/or the energy saving mode may be (de)initialized in response to a user input (e.g. via a button push on the user interface 18 of the beverage making machine 10)

At block 502 of Fig. 6, the user selection is received. The user selection is indicative of a beverage to be prepared by the beverage making machine 10. For example, the user can select a beverage to be prepared by the beverage making machine 10 (e.g. via the user interface 18 of the beverage making machine 10). In an example, the user can select a target temperature (e.g. a value or a general indication, such as low, medium, or high) for the beverage and/or a target beverage volume (e.g. a value such as 30ml, 40ml, or 50ml, etc, or a general indication, such as selecting an espresso) for the beverage. Thus, the user selection can be indicative of a temperature of the beverage to be prepared and/or a volume of the beverage to be prepared.

In the method illustrated by Fig. 6, the user selection is indicative of a black coffee to be prepared by the beverage making machine 10. A black coffee can be defined herein as a coffee that does not comprise milk. The user may also select an eco-mode. This can, for example, deliver additional energy saving possibilities, such as skipping the pre-rinse function. Alternatively, an eco-mode may be on by default and a user can de-select it.

In the fourth example, at block 504 of Fig. 6, the beverage making machine 10 determines (or identifies) whether the user selection is indicative that the beverage is to have a volume that is less than or equal to the pre-set volume. At block 504 of Fig. 6, the beverage making machine 10 also determines (or identifies) whether the user selection is indicative that the beverage is to have a temperature that is less than the pre-set temperature. If the beverage making machine 10 determines that the beverage is to have a volume that is less than or equal to the pre-set volume and that the beverage is to have a temperature that is less than the pre-set temperature, the method proceeds to block 506 of Fig. 6. On the other hand, if the beverage making machine 10 determines that the beverage is to have a volume that is greater than the pre-set volume and/or that the beverage is to have a temperature that is greater than or equal to the pre-set temperature, the method proceeds to block 516 of Fig. 6

At block 506 of Fig. 6, the one or more activities for preparing the beverage making machine 10 to prepare the beverage comprise heating one or more ingredients (e.g. water) for the beverage. For example, one or more heating components (e.g. a heater) of the beverage making machine 10 can be heated to heat the one or more ingredients. Since the user selection is indicative that the target temperature for the beverage is less than the pre-set temperature, the start-up operation is adjusted. Specifically, adjustment of the start-up operation comprises changing the pre-set temperature to the target temperature.

At block 508 of Fig. 6, the one or more activities for preparing the beverage making machine 10 to prepare the beverage comprise rinsing (e.g. pre-rinsing), as described herein. The rinsing may be performed without dispensing fluid from an output (e.g. spout) that is to dispense the beverage. As such, the rinsing can comprise an internal (pre-)rinse. In the fourth example, since the user selection is indicative that the target volume for the beverage is less than the pre-set volume, the start-up operation can be adjusted to comprise the rinsing.

At block 510 of Fig. 6, the one or more activities for preparing the beverage making machine 10 to prepare the beverage comprise grinding one more ingredients for the beverage. In the fourth example, since the user selection is indicative of a type of beverage that requires the grinding of one or more ingredients, the start-up operation is adjusted to comprise the grinding. More specifically, since the type of beverage is a coffee, grinding the one or more ingredients for the beverage comprises grinding coffee beans.

At block 512 of Fig. 6, the beverage making operation begins, whereby the beverage making machine 10 prepares the beverage. In the fourth example, the beverage making operation comprises brewing coffee.

In the fifth example, at block 514 of Fig. 6, the beverage making machine 10 determines (or identifies) that the user selection is indicative that the beverage is to have a volume that is greater than the pre-set volume. At block 514 of Fig. 6, the beverage making machine 10 also determines (or identifies) that the user selection is indicative that the beverage is to have a temperature that is greater than the pre-set temperature. If the beverage making machine 10 determines that the beverage is to have a volume that is greater than the pre-set volume and that the beverage is to have a temperature that is greater than the pre-set temperature, the method proceeds to block 516 of Fig. 6.

Since the beverage is to have a volume that is greater than the pre-set volume, at block 516 of Fig. 6, the start-up operation is adjusted to omit rinsing. Thus, in the fifth example, the start-up operation can be adjusted based on the volume.

At block 518 of Fig. 6, the one or more activities for preparing the beverage making machine 10 to prepare the beverage comprise grinding one or more ingredients for the beverage. In the fifth example, since the user selection is indicative of a type of beverage that requires the grinding of one or more ingredients, the start-up operation is adjusted to comprise the grinding. More specifically, since the type of beverage is a coffee, grinding the one or more ingredients for the beverage comprises grinding coffee beans.

At block 519 of Fig. 6, the one or more activities for preparing the beverage making machine 10 to prepare the beverage comprise heating one or more ingredients (e.g. water) for the beverage. For example, one or more heating components (e.g. a heater) of the beverage making machine 10 can be heated to heat the one or more ingredients. Since the user selection is indicative that the target temperature for the beverage is greater than the pre-set temperature, the start-up operation is adjusted. Specifically, adjustment of the start-up operation comprises changing the pre-set temperature to the target temperature. Thus, the one or more ingredients are heated to the target temperature.

In the fifth example, as illustrated by block 516 of Fig. 6, the grinding and heating can be performed at the same time. In particular, as described herein, the one or more ingredients can be safely grinded into a brew chamber since rinsing of the brew chamber is omitted. Thus, in the fifth example, the start-up operation can be adjusted based on whether a rinsing activity is to be performed.

At block 520 of Fig. 6, the beverage making operation begins, whereby the beverage making machine 10 prepares the beverage. In the fifth example, the beverage making operation comprises brewing coffee.

In the sixth example, at block 522 of Fig. 6, the beverage making machine 10 determines (or identifies) that the user selection is indicative that the beverage is to have a temperature that is less than the pre-set temperature. If the beverage making machine 10 determines that the beverage is to have a temperature that is less than the pre-set temperature, the method proceeds to block 524 of Fig. 6.

Since the beverage is to have temperature that is less than the pre-set temperature, the start-up operation is adjusted to omit the heating and rinsing activities. Thus, in the sixth example, the start-up operation can be adjusted based on the temperature that the beverage is to have.

At block 524 of Fig. 6, the one or more activities for preparing the beverage making machine 10 to prepare the beverage comprise grinding one more ingredients for the beverage. In the sixth example, since the user selection is indicative of a type of beverage that requires the grinding of one or more ingredients, the start-up operation is adjusted to comprise the grinding. More specifically, since the type of beverage is a coffee, grinding the one or more ingredients for the beverage comprises grinding coffee beans.

At block 526 of Fig. 6, the beverage making operation begins, whereby the beverage making machine 10 prepares the beverage. In the sixth example, the beverage making operation comprises brewing coffee.

Therefore, the fourth, fifth and sixth examples as described above with reference to Fig. 6 illustrate the manner in which the start-up operation of the beverage making machine 10 may be adjusted (in different ways) based on the user selection.

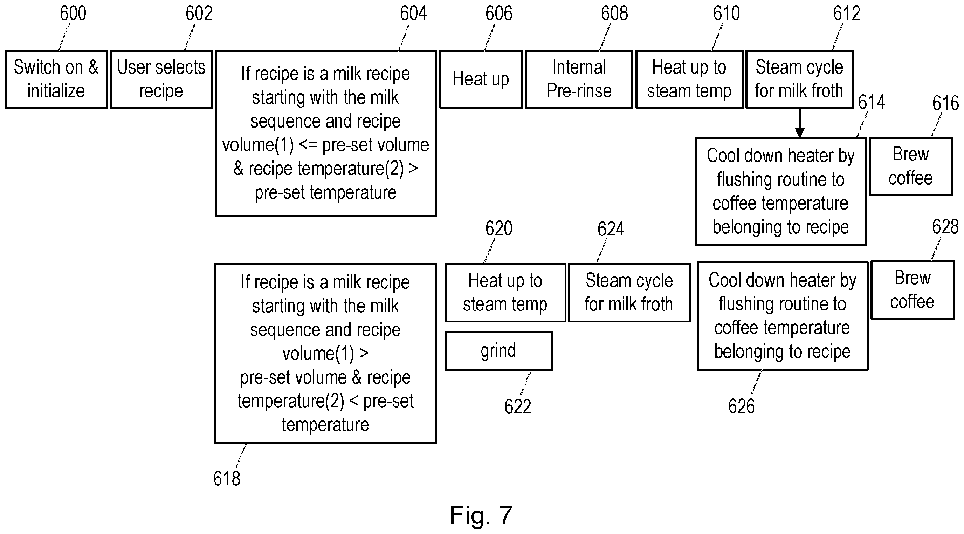

Fig. 7 illustrates a method according to an embodiment. The method is for operating a beverage making machine 10. The beverage making machine 10 described earlier with reference to Fig. 1 can be configured to operate in accordance with the method. For example, the method can be performed by or under the control of the controller 35 of the beverage making machine 10. The method may be a computer-implemented method. The method shown in Fig. 7 illustrates the manner in which a start-up operation of the beverage making machine 10 can be adjusted based on the user selection.

As illustrated in Fig. 7, the start-up operation of the beverage making machine 10 comprises one or more activities 606-614 or 620-626 for preparing the beverage making machine 10 to prepare a beverage. In the method illustrated by Fig. 7, the beverage making machine 10 is configured with a pre-set temperature (referred to herein as the first pre-set temperature) up to which one or more ingredients for the beverage are heated and a pre-set volume for the beverage. Fig. 7 illustrates different examples of how the start-up operation may be adjusted based on the user selection. In particular, Fig. 7 illustrates two examples, which are represented by blocks 604-614 of Fig. 7 ("seventh example"), and blocks 618-626 of Fig. 7 ("eighth example").

Block 600 of Fig. 7 is as described with reference to block 500 of Fig. 6. Block 602 of Fig. 7 is as described with reference to block 502 of Fig. 6, with the exception that the user selection received at block 602 of Fig. 7 is indicative that the beverage to be prepared by the beverage making machine 10 is a white coffee. Herein, a white coffee can be defined as a coffee comprising milk.

In the seventh example, at block 604 of Fig. 7, the beverage making machine 10 determines (or identifies) that the user selection is indicative that the beverage is to comprise coffee and frothed milk, and that milk frothing is to be performed prior to brewing coffee. For example, a recipe associated with the beverage to be prepared may require that preparation of the milk ingredient is performed before preparation of the coffee ingredient. At block 604 of Fig. 7, the beverage making machine 10 also determines (or identifies) that the user selection is indicative that the beverage is to have a volume that is less than or equal to the pre-set volume and that the beverage is to have a temperature that is greater than the pre-set temperature.

At block 606 of Fig. 7, since the user selection is indicative that the beverage is to have a temperature that is greater than the pre-set temperature, the one or more activities for preparing the beverage making machine 10 to prepare the beverage comprise one or more heating activities, as described herein, and the start-up operation is adjusted to change (increase) the pre-set temperature to the target temperature. The beverage making machine 10 thus heats one or more ingredients for the beverage up to the target temperature. For example, one or more heating components (e.g. a heater) of the beverage making machine 10 can be heated to heat the one or more ingredients up to the target temperature.

At block 608 of Fig. 7, since the user selection is indicative that the beverage is to have a volume that is less that the pre-set volume, the one or more activities for preparing the beverage making machine 10 to prepare the beverage comprise rinsing a chamber of the beverage making machine 10 and/or rinsing one or more conduits of the beverage making machine 10. Thus, the start-up operation is adjusted to comprise rinsing.

Since the user selection is indicative that the beverage is to comprise frothed milk, at block 610 of Fig. 7, the one or more activities for preparing the beverage making machine 10 to prepare the beverage comprise heating one or more heating components of the beverage making machine 10 to froth the milk and, at block 612 of Fig. 7, the one or more activities for preparing the beverage making machine 10 to prepare the beverage comprise frothing the milk for the beverage. Thus, the start-up operation is adjusted to comprise milk frothing. In an example, the frothing includes performing a steam cycle.

At block 614 of Fig. 7, the one or more activities for preparing the beverage making machine 10 to prepare the beverage may comprise cooling one or more heating components. In an example, the cooling can comprise rinsing the one or more heating components (e.g. with cold water). For example, the rinsing may comprise rinsing a chamber of the beverage making machine 10 and/or rinsing one or more conduits of the beverage making machine 10. The cooling can be performed to reduce the temperature of the one or more components of the beverage making machine 10 to a temperature that is suitable for brewing coffee.

At block 616 of Fig. 7, the beverage making operation begins, whereby the beverage making machine 10 prepares the beverage. In the seventh example, the beverage making operation comprises brewing coffee.

In the eighth example, at block 618 of Fig. 7, the beverage making machine 10 determines (or identifies) that the user selection is indicative that the beverage is to comprise coffee and frothed milk, and that milk frothing is to be performed prior to brewing coffee. For example, a recipe associated with the beverage to be prepared may require that preparation of the milk ingredient is performed before preparation of the coffee ingredient. At block 618 of Fig. 7, the beverage making machine 10 also determines (or identifies) that the user selection is indicative that the beverage is to have a volume that is greater that the pre-set volume and that the beverage is to have a temperature that is less than the pre-set temperature.

Blocks 620, 624 and 626 of Fig. 7 are as described with reference to blocks 610, 612 and 614 of Fig. 7 respectively.

At block 622 of Fig. 7, since the user selection is indicative of a type of beverage that requires the grinding of one or more ingredients, the beverage making machine 10 grinds one more ingredients for the beverage. More specifically, since the type of beverage is a coffee, grinding the one or more ingredients for the beverage comprises grinding coffee beans. Thus, in the eighth example, the start-up operation is adjusted to comprise grinding.

In the eighth example, the start-up operation is also adjusted such that the heating and rinsing activities, as described with reference to blocks 606 and 608 of Fig. 7 respectively for the seventh example, are omitted. Specifically, the heating described with reference to block 606 of Fig. 7 is omitted in the eighth example, since the user selection in the eight example is indicative that the beverage is to have a temperature that is less than the pre-set temperature. Furthermore, the rinsing described with reference to block 608 of Fig. 7 is omitted in the eighth example, since the user selection in the eighth example is indicative that the beverage is to have a volume that is greater than the pre-set volume.

At block 628 of Fig. 7, the beverage making operation begins, whereby the beverage making machine 10 prepares the beverage. In the eighth example, the beverage making operation comprises brewing coffee.

Therefore, the seventh and eighth examples as described above with reference to Fig. 7 illustrate the manner in which the start-up operation of the beverage making machine 10 may be adjusted (in different ways) based on the user selection.

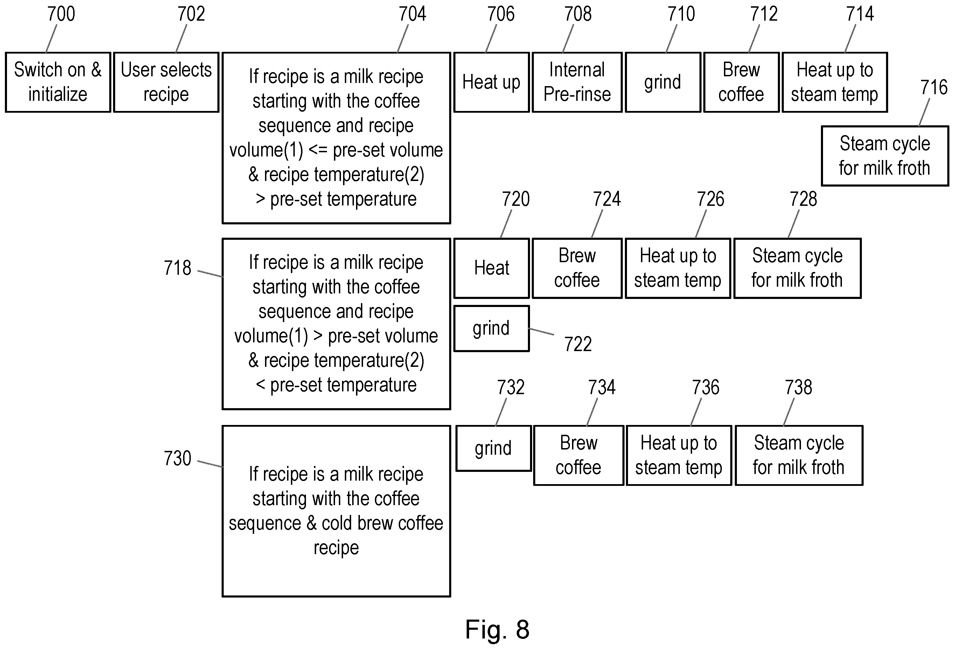

Fig. 8 illustrates a method according to an embodiment. The method is for operating a beverage making machine 10. The beverage making machine 10 described earlier with reference to Fig. 1 can be configured to operate in accordance with the method. For example, the method can be performed by or under the control of the controller 35 of the beverage making machine 10. The method may be a computer-implemented method. The method shown in Fig. 8 illustrates the manner in which a start-up operation of the beverage making machine 10 can be adjusted based on a user selection.

As illustrated in Fig. 8, the start-up operation of the beverage making machine 10 comprises one or more activities 706-716, 720-728, or 732-738 for preparing the beverage making machine 10 to prepare a beverage. In the method illustrated by Fig. 8, the beverage making machine 10 is configured with a pre-set temperature (referred to herein as the first pre-set temperature) up to which one or more ingredients for the beverage are heated and a pre-set volume for the beverage. Fig. 8 illustrates different examples of how the start-up operation may be adjusted based on the user selection. In particular, Fig. 8 illustrates three examples, which are represented by blocks 704-716 of Fig. 8 ("ninth example"), blocks 718-728 of Fig. 7 ("tenth example"), and blocks 730-738 of Fig. 8 ("eleventh example").

Block 700 of Fig. 8 is as described with reference to block 500 of Fig. 6, and block 702 of Fig. 8 is as described with reference to block 602 of Fig. 7. In the ninth example, block 704 of Fig. 8 is as described with reference to block 604 of Fig. 7, with the exception that, at block 704 of Fig. 8, the beverage making machine 10 determines (or identifies) that the user selection is indicative that milk frothing is to be performed after brewing coffee. For example, the recipe associated with the beverage to be prepared may require that preparation of a milk ingredient is performed after preparation of a coffee ingredient.

Blocks 706, 708, 710, 712, 714 and 716 of Fig. 8 are as described with reference to blocks 606, 608, 622, 616, 610 and 612 of Fig. 7 respectively.

In the ninth example, the start-up operation is adjusted such that milk frothing is performed after coffee brewing. That is, the sequence into which two or more activities are ordered is changed in the tenth example.

In the tenth example, block 718 of Fig. 8 is as described with reference to block 618 of Fig. 7, with the exception that, at block 718 of Fig. 8, the beverage making machine 10 determines (or identifies) that the user selection is indicative that milk frothing is to be performed after brewing coffee. For example, the recipe associated with the beverage to be prepared may require that preparation of a milk ingredient is performed after preparation of a coffee ingredient.

In the tenth example, the start-up operation is adjusted such that the rinsing described with reference to block 608 of Fig. 7 and block 708 of Fig. 8 is omitted. The rinsing can be omitted since the user selection is indicative that the beverage is to have a volume that is greater than the pre-set volume.

At block 720 of Fig. 8, the one or more activities for preparing the beverage making machine 10 to prepare the beverage comprise heating the one or more ingredients for the beverage. For example, one or more heating components (e.g. a heater) of the beverage making machine 10 can be heated to heat the one or more ingredients. Since the target temperature for the beverage is less than the pre-set temperature, the start-up operation is adjusted by changing the pre-set temperature to the target temperature. The beverage making machine 10 thus heats the one or more ingredients for the beverage up to the target temperature.

At block 722 of Fig. 8, since the user selection is indicative of a type of beverage that requires the grinding of one or more ingredients, the beverage making machine 10 grinds one more ingredients for the beverage. More specifically, since the type of beverage is a coffee, grinding the one or more ingredients for the beverage comprises grinding coffee beans. Thus, in the tenth example, the start-up operation is adjusted to comprise grinding.

As illustrated by Fig. 8, the heating described with reference to block 720 of Fig. 8 and the grinding described with reference to block 722 of Fig. 8 can be performed at the same time. For example, grinding can be performed using a chamber of the beverage making machine 10 since the chamber will not be (pre)rinsed, as rinsing is omitted in the tenth example.

Blocks 724, 726 and 728 of Fig. 8 are as described with reference to blocks 616, 610 and 612 of Fig. 7 respectively. However, in the tenth example, the start-up operation is adjusted such that milk frothing is performed after coffee brewing. That is, the sequence into which two or more activities are ordered is changed in the tenth example.

In the eleventh example, at block 730 of Fig. 8, the beverage making machine 10 determines (or identifies) that the user selection is indicative that the beverage is to comprise coffee and milk, and that milk frothing is to be performed after brewing coffee. For example, the recipe associated with the beverage to be prepared may require that preparation of a milk ingredient is performed after preparation of a coffee ingredient. At block 730 of Fig. 8, the beverage making machine 10 also determines (or identifies) that the user selection is indicative that the beverage is to be cold (e.g. a cold brew coffee). Thus, in the eleventh example, the beverage can have a temperature that is lower than the pre-set temperature.

In the eleventh example, the start-up operation is adjusted to omit the rinsing described with reference to block 608 of Fig. 7 and block 708 of Fig. 8. Therefore, rinsing does not occur in the start-up operation of the eleventh example.

In the eleventh example, the start-up operation is also adjusted to omit the heating operation described with reference to block 720 of Fig. 8. For example, the user selection can be indicative that the beverage to be prepared is a cold beverage and the start-up operation may thus be adjusted to omit heating, e.g. water for coffee brewing.

Blocks 732, 734, 736 and 738 of Fig. 8 are as described with reference to blocks 622, 616, 610 and 612 of Fig. 7 respectively. However, in the eleventh example, the start-up operation is adjusted such that milk frothing is performed after coffee brewing. That is, the sequence into which two or more activities are ordered is changed in the eleventh example.

Therefore, the ninth, tenth and eleventh examples as described above with reference to Fig. 8 illustrate the manner in which the start-up operation of the beverage making machine 10 may be adjusted (in different ways) based on the user selection.

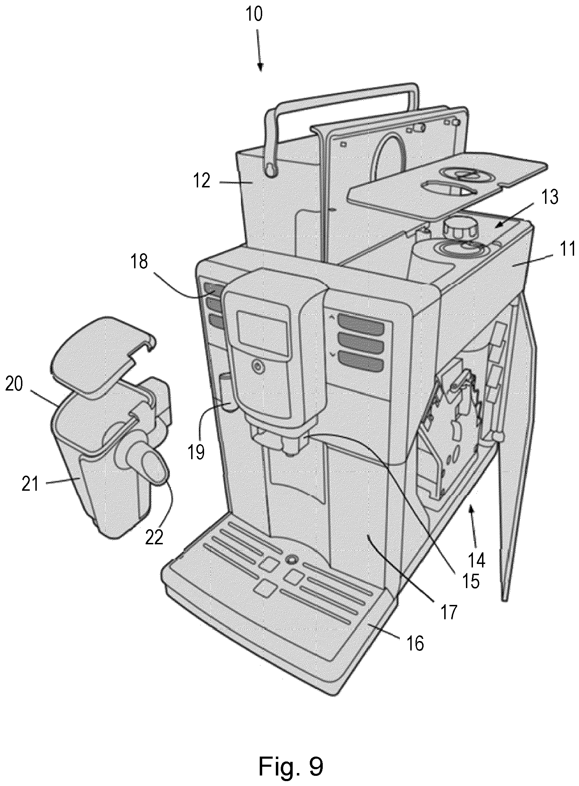

The are many beverage making machines to which the techniques described herein can be applied. An example of a possible beverage making machine to which the techniques described herein can be applied will now be described with reference to Fig. 9. However, it will be understood that the techniques described herein can also be applied to other beverage making machines.

Fig. 9 shows a coffee machine 10 or, more specifically, a bean-to-cup (e.g. espresso) coffee machine as a practical example of a beverage making machine. The coffee machine 10 is shown in a normal, operational orientation in Fig. 9 and, where any reference having an orientation aspect is made in the present text, such reference is to be understood against the background of this normal, operational orientation.

As illustrated in Fig. 9, the coffee machine 10 can comprise a main body 11. The main body can have a space for accommodating a removably arranged water reservoir 12 and a space 13 for accommodating coffee beans.

Although not illustrated in Fig. 9, the coffee machine 10 may comprise any one or more of a grinder (or grinding mechanism) for grinding coffee beans to create coffee grinds, a pressurizing system for compressing the coffee grinds, a brew chamber for receiving and brewing the (e.g. compressed) coffee grinds, a heater for heating water, and a pumping arrangement for pumping heated water through the (e.g. compressed) coffee grinds in the brew chamber. Any one or more of these components can be located in an internal space 14 of the main body 11. That is, any one or more of these components can be an internal component. For example, the grinder can be an internal grinder according to some embodiments. In other embodiments, the grinder may be an external grinder, e.g. positioned on top of the main body 11.

The pressurizing system for compressing the coffee grinds may be a ground bean compressor comprising a piston that is movable in the brew chamber. The heater may comprise a thermoblock or a flow-through heater for heating water.

As illustrated in Fig. 9, the coffee machine 10 may comprise a spout (or outlet) 15 for outputting (or dispensing, delivering, or providing) a beverage. In the embodiment illustrated in Fig. 9, the beverage may be a coffee drink, water, or (e.g. frothed) milk. The coffee drink may comprise coffee alone or coffee and (e.g. frothed) milk. The spout 15 may be arranged downstream of a beverage outlet of the brew chamber. The spout 15 may be located over a drip tray 16 that defines a water collecting area of the coffee machine 10.

As also illustrated in Fig. 9, the coffee machine 10 may comprise a waste bin 17 for receiving used coffee grinds after a coffee brewing process has taken place. The waste bin 17 may be removable from the main body 11 in order to facilitate emptying and cleaning of the waste bin 17.

As also illustrated in Fig. 9, the coffee machine 10 may comprise a user interface 18 for receiving the user selection referred to herein, which may comprise a user selection of a beverage. The user interface 18 may be functional to show relevant information to the user. For example, the user interface 18 may comprise some type of screen.

As also illustrated in Fig. 9, the coffee machine 10 may comprise a steam outlet 19 for outputting steam and/or for delivering hot water, e.g. depending on the user selection at the user interface 18. Although not illustrated in Fig. 9, the coffee machine 10 may comprise an additional heater for generating steam to be supplied at the steam outlet 19. Delivering steam is useful when it is required to heat and/or froth milk.

As also illustrated in Fig. 9, the coffee machine 10 may comprise a milk frothing unit 20. The milk frothing unit 20 may comprise a milk container 21 for holding milk and an outlet 22 for outputting (or dispensing, delivering, or providing) frothed milk. The milk frothing unit 20 can be separate from the main body 11. For example, the milk frothing unit 20 may be coupled to the steam outlet 19. The milk frothing unit 20 may be removable from the steam outlet 19 in order to facilitate filling and cleaning of the container 21.

Outputting hot water from the spout 15 can provide additional options to the user, such as making tea or instant soup. Hot water intended for emission at the steam outlet 19 can follow a different path from the heater through the coffee machine 10 than hot water intended for use in a coffee brewing process. For example, hot water intended for emission at the steam outlet 19 may not pass the brew chamber.

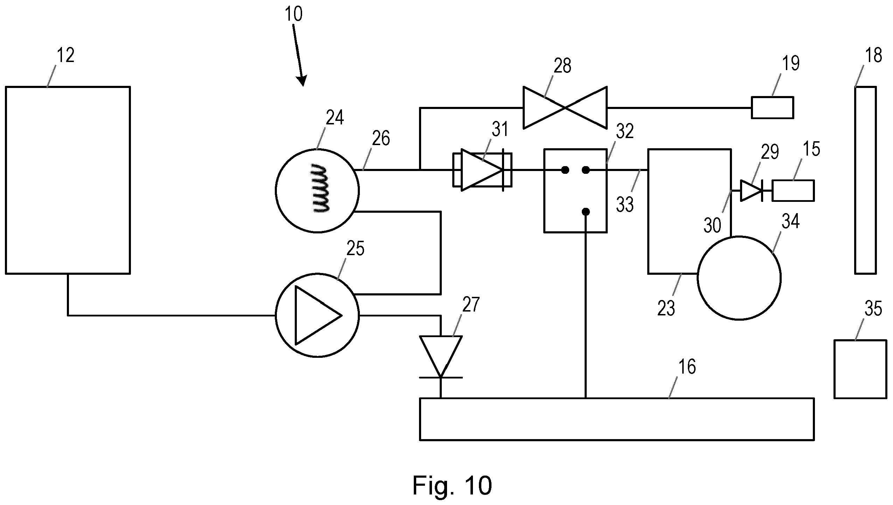

Fig. 10 shows a simplified schematic of various components of the coffee machine 10, including the water reservoir 12, the spout 15, the drip tray 16, the user interface 18 and the steam outlet 19, and also the brew chamber 23, the heater 24, and the pumping arrangement 25 (e.g. located in the internal space 14 of the main body 11). In Fig. 10, various conduits of a conduit system of the coffee machine 10 are indicated as continuous lines. The conduit system includes a main conduit arrangement 26 configured to enable transport of water from the heater 24 to the brew chamber 23. The main conduit arrangement 26 may, for example, comprise a tube-like conduit or a system of tube-like conduits.

The coffee machine 10 can comprise various valves. For example, any one or more of the following valves may be present in the coffee machine 10:
- an overpressure valve 27 located between the pumping arrangement 25 and the drip tray 16;
- an electronic valve 28 located between the heater 24 and the steam outlet 19;
- an outlet valve 29 located at the beverage outlet 30 of the brew chamber 23;
- a check valve 31 arranged in the main conduit arrangement 26, an inlet of the check valve 31 being coupled to the heater 24, and
- an intermediate valve 32 arranged in the main conduit arrangement 26, an outlet of the intermediate valve 32 being coupled to a water inlet 33 of the brew chamber 23.

The electronic valve 28 may be a single valve, but it is also possible that more than one valve may be positioned between the heater 24 and the steam outlet 19 for realizing different variations of the circuit, e.g. for delivering milk/hot water/steam. The electronic valve 28 and/or at least one additional valve may be configured to enable a discharge of water to the drip tray 16.

The brew chamber 23 may be movable between two positions by means of a motor 34. For example, the brew chamber 23 may be movable between a position as illustrated in Fig. 10, which is a coffee brewing position at which the brew chamber 23 is coupled to the main conduit arrangement 26 through the intermediate valve 32 to thereby be capable of receiving hot water from the heater 24, and another position, which is a coffee grinds receiving position at which the brew chamber 23 is coupled to a combination of the space 13 for accommodating coffee beans and the grinder functioning as a matter supply area, to thereby be capable of receiving coffee grinds.

In the coffee grinds receiving position, the brew chamber 23 may be decoupled from the main conduit arrangement 26 and the intermediate valve 32 may extend above the drip tray 16, wherein water that may be present in the brew chamber 23 is allowed to freely pass the water inlet 33 of the brew chamber 23 and the intermediate valve 32 and fall down to the drip tray 16 under the influence of gravity. In this way, any water residue from a previous coffee brewing process may be discharged from the brew chamber 23, which is a contributing factor in achieving that only clean, fresh water is used in a new coffee brewing process. When the brew chamber 23 is in the coffee grinds receiving position, an outlet of the check valve 31 may extend above the drip tray 16, wherein the check valve 31 may be kept closed as long as the pressure at the inlet side thereof is below a pressure threshold. This pressure threshold may, for example, be in a range of 2 to 4 bar.

The intermediate valve 32 can be configured such that, when the brew chamber 23 is moved from the coffee grinds receiving position to the coffee brewing position, the intermediate valve 32 causes interruption of a water path from the outlet of the check valve 31 to the drip tray 16 and establishment of a water path from the outlet of the check valve 31 to the brew chamber 23. The interruption of the water path from the outlet of the check valve 31 to the drip tray 16 can be realized in any suitable manner. For example, the intermediate valve 32 may comprise a sleeve-like component that is slid over the check valve 31 when the brew chamber 23 is moved from the coffee grinds receiving position to the coffee brewing position, to thereby form a physical bridge along which water can flow from the outlet of the check valve 31 towards the brew chamber 23.

As mentioned earlier, the coffee machine 10 comprises a controller 35 that is configured to control operation of the coffee machine 10. To that end, the controller 35 can be arranged and configured to communicate with various components of the coffee machine 10, such as any one or more of the grinder, the pressurizing system, the heater 24, the pumping arrangement 25, the electronic valve 28, and the motor 34. The controller 35 may be configured to receive user input (e.g. the user selection referred to herein) through the user interface 18. The user input may be taken into account in determining respective operation parameters.

The controller 35 can be configured to receive a user selection and adjust a start-up operation of the beverage making machine 10 based on the user selection. The user selection is indicative of a beverage to be prepared by the beverage making machine 10. The start-up operation is performed before a beverage making operation of the beverage making machine 10. The start-up operation is performed before a beverage making operation of the beverage making machine 10.

In some embodiments, the start-up operation may comprise a rinsing procedure. Thus, in these embodiments, the rinsing procedure may be adjusted. The rinsing procedure can be for the purpose of rinsing the brew chamber 23 with water prior to or after a beverage brewing process. Measures may be taken to achieve that a discharge of rinsing water from the brew chamber 23 takes place at another position on the brew chamber 23 than the position of a beverage outlet 30 of the brew chamber 23, particularly at a position which is an upstream position on the brew chamber 23 as seen in a normal direction of water and brewed beverage through the beverage making machine 10, i.e. a direction of water and brewed beverage associated with the beverage brewing process. This can be performed on the basis of appropriate control of operation of the beverage making machine 10 during the rinsing procedure. It is not necessary to have a separate outlet on the brew chamber 23 for the rinsing water, as use may be made of a water inlet 33 of the brew chamber 23 for the purpose of discharging the rinsing water from the brew chamber 23, for example.

In some embodiments, the start-up operation may comprise a preheating rinsing procedure. Thus, in these embodiments, the preheating rinsing procedure may be adjusted. The preheating rinsing procedure can comprise activating the heater 24 and activating the pumping arrangement 25 to displace water from the heater 24 to the brew chamber 23 in the coffee brewing position, through the main conduit arrangement 26 and the water inlet 33 of the brew chamber 23, for the purpose of rinsing the brew chamber 23 with hot water and thereby heat up the brew chamber 23.

In some embodiments, the beverage making operation may comprise initiation of a coffee brewing process. The coffee brewing process can comprise activating the grinder to grind an amount of coffee beans, supplying the coffee grinds to the brew chamber 23 in the coffee grinds receiving position, activating the motor 34 to move the brew chamber 23 from the coffee grinds receiving position to the coffee brewing position, activating the pumping arrangement 25 to displace water from the heater 24 in the active state to the brew chamber 23, and also to increase the pressure prevailing in the brew chamber 23 to such a level that the outlet valve 29 opens and the freshly brewed coffee drink is discharged from the brew chamber 23 through the beverage outlet 30 and dispensed from the spout 15, and activating the motor 34 once more to move the brew chamber 23 from the coffee brewing position to the coffee grinds receiving position as a rest position. The outlet valve 29 may be configured so as to open at a predefined pressure, e.g. a pressure of about 6 bar.

The controller 35 may be configured to first apply an algorithm designed to make the coffee machine 10 perform the preheating rinsing procedure and to subsequently apply an algorithm designed to make the coffee machine 10 perform the coffee brewing process. The algorithm of the preheating rinsing procedure may comprise steps to operate the heater 24 to heat water and to realize a supply of hot water from the heater 24 to the brew chamber 23 through the main conduit arrangement 26 and the water inlet 33 of the brew chamber 23. The algorithm of the preheating rinsing procedure may comprise steps to first realize a discharge of water from the main conduit arrangement 26 to the drip tray 16, whereby it is achieved that the main conduit arrangement 26 is emptied of cold water first, which is beneficial to preheating efficiency so that the preheating rinsing procedure can be performed in a short time and with a limited amount of water. The algorithm of the preheating rinsing procedure may comprise steps of activating the pumping arrangement 25 while the brew chamber 23 is in the coffee grinds receiving position (rest position), so that cold water is discharged from the main conduit arrangement 26 to the drip tray 16, through the check valve 31, shutting off the pumping arrangement 25 to stop the discharge to the drip tray 16, activating the motor 34 to move the brew chamber 23 from the coffee grinds receiving position to the coffee brewing position, activating the heater 24, and activating the pumping arrangement 25 to realize a supply of hot water from the heater 24 to the brew chamber 23, through the main conduit arrangement 26 and the water inlet 33 of the brew chamber 23. It can be this supply of hot water that is used to actually rinse the brew chamber 23, and the water involved can also be referred to as rinsing water.

The rinsing water may be allowed to stay inside the brew chamber 23 before being discharged from the brew chamber 23, so that there is sufficient time for heat transfer from the water to the brew chamber walls. The discharge of the rinsing water may take place at another position on the brew chamber 23 than the position of the beverage outlet 30. In view thereof, the pumping arrangement 25 may be controlled such that the pressure in the brew chamber 23 remains well below the level needed for opening the outlet valve 29, and the algorithm of the preheating rinsing procedure may comprise steps of shutting off the pumping arrangement 25 after a suitable volume of rinsing water has reached the brew chamber 23, and activating the motor 34 to move the brew chamber 23 from the coffee brewing position to the coffee grinds receiving position after a waiting period. A duration of the waiting period may, for example, be in a range of 2 to 20 seconds.

As explained earlier, in the coffee grinds receiving position, the brew chamber 23 may be decoupled from the main conduit arrangement 26 and the intermediate valve 32 may extend above the drip tray 16, wherein water as may be present in the brew chamber 23 can be allowed to freely pass the water inlet 33 of the brew chamber 23 and the intermediate valve 32 and fall down to the drip tray 16 under the influence of gravity. Thus, by keeping the pressure in the brew chamber 23 low enough to avoid opening of the outlet valve 29 during the rinsing procedure, and by moving the brew chamber 23 from the coffee brewing position to the coffee grinds receiving position at a certain point near the end of the rinsing procedure, it is achieved that the rinsing water is contained in the brew chamber 23 until that point and then discharged from the brew chamber 23 through the water inlet 33. As a result, the beverage outlet 30 can be exclusively used for discharging coffee drinks from the brew chamber 23, so that the coffee machine 10 only dispenses coffee drinks from the spout 15. The rinsing water may reach the drip tray 16 via another route than through the spout 15, wherein it cannot happen that the rinsing water ends up in a receptacle positioned to receive a coffee drink from the spout 15.

With the brew chamber 23 at the coffee grinds receiving position, the coffee brewing process can start directly after the preheating rinsing procedure has ended.

Various options which are known to be applicable to beverage making machines are applicable. In this respect, it is noted that the water reservoir 12 of the beverage making machine 10 may be either internal or external, or may be plumbed in, a sensor in communication with the controller 35 may be provided for the purpose of monitoring the level of liquid in the drip tray 16, a sensor in communication with the controller 35 may be provided for the purpose of monitoring the level of matter in the waste bin 17, one or more sensors in communication with the controller 35 may be provided for detecting removal of the water reservoir 12, the drip tray 16 and/or the waste bin 17 from the main body 11, etc. Also, it is possible that the beverage making machine 10 comes with a connected device (e.g. UE) for remote control of the beverage making machine 10, wherein the controller 35 is configured to receive remote signals. In respect of the optional bean grinding functionality of the beverage making machine 10, it is noted that the controller 35 may be configured to allow a user to overrule this functionality or to deliberately activate this functionality.

The water collecting area to which the rinsing water can be discharged may be an area that is especially provided for the purpose of receiving the rinsing water, but use may be made of a water collecting area that is already provided in the design of the beverage making machine 10, such as the area defined by the drip tray 16, as is the case in the above-described examples, or the area defined by the water reservoir 12. As will be apparent to the person skilled in the art, the above-mentioned fact that the main conduit arrangement 26 may comprise a tube-like conduit or a system of tube-like conduits, for example, is a general fact and not solely linked to any of the particular aspects of the examples addressed in the foregoing. The same is applicable to the above-mentioned fact that the heater 24 may comprise a thermoblock or a flow-through heater, for example.

As suggested in the foregoing, a bean-to-cup (e.g. espresso) coffee machine is just one out of many feasible examples of the beverage making machine 10 described herein. The beverage making machine 10 described herein does not necessarily need to be equipped with a mechanism for storing coffee beans and grinding coffee beans so that fresh coffee grinds can be supplied to the brew chamber 23 when the beverage making machine 10 is operated to make a coffee drink. As an alternative, it is possible that the beverage making machine 10 is configured to receive pre-ground coffee or to make use of capsules, pods or the like.

The hydraulic system of the beverage making machine 10 may be of any suitable layout, e.g. as long as it is possible to realize a discharge of rinsing water from the brew chamber 23 at another position on the brew chamber 23 than the position of the beverage outlet 30 in some way. The beverage outlet 30 may comprise one or more openings in a brew chamber wall, for example. Similarly, the water inlet 33 may comprise one or more openings in a brew chamber wall.

There is also provided a computer program product comprising a computer readable medium. The computer readable medium has a computer readable code embodied therein. The computer readable code is configured such that, on execution by a suitable computer or processor, the computer or processor is caused to perform the method described herein. The computer readable medium may be, for example, any entity or device capable of carrying the computer program product. For example, the computer readable medium may include a data storage, such as a ROM (such as a CD-ROM or a semiconductor ROM) or a magnetic recording medium (such as a hard disk). Furthermore, the computer readable medium may be a transmissible carrier, such as an electric or optical signal, which may be conveyed via electric or optical cable or by radio or other means. When the computer program product is embodied in such a signal, the computer readable medium may be constituted by such a cable or other device or means. Alternatively, the computer readable medium may be an integrated circuit in which the computer program product is embedded, the integrated circuit being adapted to perform, or used in the performance of, the method described herein.

There is thus provided an improved beverage making machine 10 and an improved technique for operating a beverage making machine 10.

The techniques described herein enable improved reliability of operation of the beverage making machine 10 by adjusting the start-up operation of the beverage making machine 10 to take into account the specific beverage to be prepared, as selected by a user. For example, depending on the user selection of the beverage that is to be prepared, the beverage making machine 10 can adjust the manner in which it performs start-up activities (e.g. heating activities, rinsing activities, grinding activities, etc.), such that they are actually suitable for the beverage that is selected. Thus, the selected beverage can be prepared in an optimal manner.

Furthermore, the techniques described herein enable improved efficiency of operation of a beverage making machine 10 by reducing waiting time for a user. In particular, the start-up operation is advantageously adjusted before the beverage making machine 10 actually begins the start-up operation. This avoids activities being performed incorrectly or unnecessarily, thereby avoiding delays in the start-up operation. Moreover, the user can (e.g. immediately) make a beverage selection after the beverage making machine 10 has been switched on and the user does not have to wait until the beverage making machine 10 has performed a start-up operation before making a selection, which further improves efficiencies. In the manner described herein, time is saved between selection of a beverage and completion of the beverage preparation. In general, the time between switching on the beverage making machine 10 and the user receiving their selected beverage is advantageously reduced.

Moreover, the adjustment of the start-up operation before the beverage making machine 10 actually begins the start-up operation can also reduce or avoid resource wastage and/or unnecessary energy expenditure. In a particular example, it would be a waste of resources and unnecessary energy expenditure to heat up a beverage making machine 10 during a start-up operation if a user were to subsequently select a cold beverage (e.g. cold brew). The optimization provided by the improved techniques described herein can advantageously prevent such resource wastage and unnecessary energy expenditure by avoiding the unnecessary heating activity.

Some more specific advantages of the embodiments described herein include, for example, energy savings by avoiding unnecessary heating-up/cooling-down, waste water reduction by avoiding unnecessary (pre-)rinsing and cooling-down, and/or shortened start-up times by skipping (pre-)rinsing where possible and having heating and grinding take place at same time.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality.

A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems.

Elements and aspects discussed for or in relation with a particular embodiment may be suitably combined with elements and aspects of other embodiments, unless explicitly stated otherwise. Thus, the mere fact that certain measures are recited in mutually different dependent claims does not indicate that a combination of these measures cannot be used to advantage.

The terms "comprise" and "include" as used in this text will be understood by a person skilled in the art as covering the term "consist of". Hence, the term "comprise" or "include" may in respect of an embodiment mean "consist of", but may in another embodiment mean "contain/have/be equipped with at least the defined species and optionally one or more other species".

It will be clear to a person skilled in the art that the scope of the invention is not limited to the examples discussed in the foregoing, but that several amendments and modifications thereof are possible without deviating from the scope of the invention as defined in the attached claims. It is intended that the invention be construed as including all such amendments and modifications insofar they come within the scope of the claims or the equivalents thereof. While the invention has been illustrated and described in detail in the figures and the description, such illustration and description are to be considered illustrative or exemplary only, and not restrictive. The invention is not limited to the disclosed embodiments. The drawings are schematic, wherein details which are not required for understanding the invention may have been omitted, and not necessarily to scale. Any reference signs in the claims should not be construed as limiting the scope.

## Claims

1. A method (100) for operating a beverage making machine (10), the method comprising:
receiving (102) a user selection, wherein the user selection is indicative of a beverage to be prepared by the beverage making machine (10); and
adjusting (104) a start-up operation of the beverage making machine (10) based on the user selection, wherein the start-up operation is performed before a beverage making operation of the beverage making machine (10), and
wherein the user selection is received and the start-up operation is adjusted before the beverage making machine (10) begins the start-up operation.

2. The method as claimed in claim 1, wherein:
the start-up operation comprises one or more activities for preparing the beverage making machine (10) to prepare the beverage.

3. The method as claimed in claim 2, wherein:
adjusting the start-up operation comprises any one or more of:
changing one or more conditions that the beverage making machine (10) is caused to meet when the one or more activities for preparing the beverage making machine (10) are executed;
omitting at least one of the one or more activities for preparing the beverage making machine (10); and
changing a characteristic of at least one of the one or more activities for preparing the beverage making machine (10).

4. The method as claimed in claim 2 or 3, wherein:
the one or more activities for preparing the beverage making machine (10) comprise any one or more of:
rinsing a chamber (23) of the beverage making machine (10) in which the beverage is to be prepared;
rinsing one or more conduits (26) of the beverage making machine (10) through which fluid is to flow to prepare the beverage;
heating one or more ingredients for the beverage;
cooling one or more ingredients for the beverage;
heating one or more heating components of the beverage making machine (10), wherein the one or more heating components are configured to heat one or more ingredients for the beverage;
cooling one or more cooling components of the beverage making machine (10), wherein the one or more cooling components are configured to cool one or more ingredients for the beverage;
setting a grind size for a grinder of the beverage making machine (10), wherein the grinder is configured to grind one or more ingredients;
grinding one or more ingredients for the beverage;
compressing one or more ingredients for the beverage;
positioning one or more components of the beverage making machine (10);
outputting one or more signals to the user;
setting a start time for at least one of the one or more activities for preparing the beverage; and
ordering, into a sequence, two or more activities for preparing the beverage making machine (10).

5. The method as claimed in claim 4, wherein:
the one or more activities for preparing the beverage making machine (10) comprise rinsing the chamber (23) and adjusting the start-up operation comprises omitting rinsing the chamber (23) or changing a characteristic of rinsing the chamber (23);
the one or more activities for preparing the beverage making machine (10) comprise rinsing the one or more conduits (26) and adjusting the start-up operation comprises omitting rinsing the one or more conduits (26) or changing a characteristic of rinsing the one or more conduits (26);
the one or more activities for preparing the beverage making machine (10) comprise heating the one or more ingredients and adjusting the start-up operation comprises omitting heating the one or more ingredients or changing a first pre-set temperature up to which the one or more ingredients are heated;
the one or more activities for preparing the beverage making machine (10) comprise cooling the one or more ingredients and adjusting the start-up operation comprises omitting cooling the one or more ingredients or changing a second pre-set temperature down to which the one or more ingredients are cooled;
the one or more activities for preparing the beverage making machine (10) comprise heating the one or more heating components of the beverage making machine (10) and adjusting the start-up operation comprises omitting heating the one or more heating components of the beverage making machine (10) or changing a third pre-set temperature up to which the one or more heating components are heated;
the one or more activities for preparing the beverage making machine (10) comprise cooling the one or more heating components of the beverage making machine (10) and adjusting the start-up operation comprises omitting cooling the one or more heating components of the beverage making machine (10) or changing a fourth pre-set temperature up to which the one or more cooling components are heated;
the one or more activities for preparing the beverage making machine (10) comprise setting the grind size and adjusting the start-up operation comprises increasing or decreasing the grind size;
the one or more activities for preparing the beverage making machine (10) comprise grinding one or more ingredients for the beverage and adjusting the start-up operation comprises omitting the grinding or starting the grinding earlier or later;
the one or more activities for preparing the beverage making machine (10) comprise compressing one or more ingredients for the beverage and adjusting the start-up operation comprises omitting the compressing or starting the compressing earlier or later;
the one or more activities for preparing the beverage making machine (10) comprise positioning the one or more components and adjusting the start-up operation comprises changing a position into which the one or more are positioned;
the one or more activities for preparing the beverage making machine (10) comprise outputting the one or more signals and adjusting the start-up operation comprises omitting outputting the one or more signals or changing the one or more signals;
the one or more activities for preparing the beverage making machine (10) comprise setting the start time and adjusting the start-up operation comprises changing the start time; and/or
the one or more activities for preparing the beverage making machine (10) comprise ordering, into the sequence, the two or more activities for preparing the beverage making machine (10) and adjusting the start-up operation comprises changing the sequence.

6. The method as claimed in claim 5, wherein:
rinsing the chamber (23) is omitted if the user selection is indicative that the beverage is to have a volume greater than a pre-set volume, the beverage is to have a temperature less than the first pre-set temperature, the beverage is to have a temperature less than the second pre-set temperature, and/or the beverage is to be prepared in an energy saving mode;
rinsing the one or more conduits (26) is omitted if the user selection is indicative that the beverage is to have a volume greater than a pre-set volume, the beverage is to have a temperature less than the first pre-set temperature, the beverage is to have a temperature less than the second pre-set temperature, and/or the beverage is to be prepared in an energy saving mode;
heating the one or more ingredients is omitted if the user selection is indicative that the beverage is to have a temperature less than the first pre-set temperature;
cooling the one or more ingredients is omitted if the user selection is indicative that the beverage is to have a temperature greater than the second pre-set temperature;
the first pre-set temperature is changed if the user selection is indicative that the beverage is to have a temperature different from the first pre-set temperature;
the second pre-set temperature is changed if the user selection is indicative that the beverage is to have a temperature different from the second pre-set temperature;
heating the one or more heating components is omitted if the user selection is indicative that the beverage is to have a temperature less than the third pre-set temperature;
cooling the one or more heating components is omitted if the user selection is indicative that the beverage is to have a temperature greater than the fourth pre-set temperature;
the third pre-set temperature is changed if the user selection is indicative that the beverage is to have a temperature different from the third pre-set temperature;
the fourth pre-set temperature is changed if the user selection is indicative that the beverage is to have a temperature different from the fourth pre-set temperature;
the grind size is increased if the user selection is indicative that a larger grind size is required;
the grind size is decreased if the user selection is indicative that a smaller grind size is required;
the grinding is omitted if the user selection is indicative that the beverage is to be prepared without grinding, the grinding is started earlier if the user selection is indicative that the beverage is to be prepared without rinsing, or the grinding is started later if the user selection is indicative that the beverage is to be prepared with rinsing;
the compressing is omitted if the user selection is indicative that the beverage is to be prepared without compressing, the compressing is started earlier if the user selection is indicative that the beverage is to be prepared without rinsing, or the compressing is started later if the user selection is indicative that the beverage is to be prepared with rinsing;
the position of the one or more components is changed if the user selection is indicative that preparation of the beverage requires the one or more components to be positioned differently;
the start time is changed if the user selection is indicative that the beverage requires more or less of the one or more activities for preparing the beverage making machine (10) to be performed; and/or
the two or more activities are reordered into an updated sequence if the user selection is indicative that preparation of the beverage requires the two or more activities to be performed in a different order.

7. The method as claimed in any of the preceding claims, wherein:
the beverage making operation comprises one or more activities for preparing the beverage.

8. The method as claimed in claim 7, wherein:
the one or more activities for preparing the beverage comprise any one or more of
heating one or more ingredients for the beverage;
cooling one or more ingredients for the beverage;
grinding one or more ingredients for the beverage;
compressing one or more ingredients for the beverage;
mixing two or more ingredients for the beverage;
frothing one or more ingredients for the beverage;
brewing the beverage;
adding flavors to the beverage;
adding one or more gases to the beverage;
dispensing the beverage; and
dispensing steam for the beverage.

9. The method as claimed in any of the preceding claims, wherein:
the start-up operation is performed after an initialization operation of the beverage making machine (10).

10. The method as claimed in claim 9, wherein:
the initialization operation comprises one or more activities for initializing the beverage making machine (10).

11. The method as claimed in claim 10, wherein:
the one or more activities for initializing the beverage making machine (10) comprise one or more of:
switching on the beverage making machine (10);
starting a controller (35) configured to control the operation of the beverage making machine (10);
starting a user interface (18) for receiving the user selection; and
checking a condition of one or more components of the beverage making machine (10).

12. The method as claimed in claim 11, the method comprising:
if an error is detected during the initialization operation:
outputting an alert signal to indicate that the error is detected; and/or
disabling the user selection until the error is resolved.

13. A beverage making machine (10) comprising:
a controller (35) configured to perform the method as claimed in any of claims 1 to 12.

14. The beverage making machine (10) as claimed in claim 13, the beverage making machine (10) comprising:
a grinder for grinding one or more ingredients for the beverage; and/or
a frother for frothing one or more ingredients for the beverage.

15. A computer program product comprising a computer readable medium, the computer readable medium having a computer readable code embodied therein, the computer readable code being configured such that, on execution by a suitable computer or processor, the computer or processor is caused to perform the method as claimed in any of claims 1-12.
